# FASCICULE DE BREVET EUROPEEN

(11) **EP 2 396 564 B1**
(45) Date de publication et mention de la délivrance du brevet: **05.06.2013**
(21) Numéro de dépôt: 10708270.3
(22) Date de dépôt: 03.02.2010
(51) Int. Cl.: F16D 13/75, F16D 23/12

(54) **MECANISME DE COMMANDE POUR UN SYSTEME D'EMBRAYAGE A FRICTION COMPORTANT UN DISPOSITIF DE RATTRAPAGE DE JEU**
STEUERMECHANISMUS FÜR EIN REIBKUPPLUNGSSYSTEM MIT SPIELAUSGLEICHSVORRICHTUNG
CONTROL MECHANISM FOR A FRICTION CLUTCH SYSTEM, COMPRISING A CLEARANCE ADJUSTMENT DEVICE

(30) Priorité: 12.02.2009 FR 0950902
(43) Date de publication de la demande: 21.12.2011
(73) Titulaire: Valeo Embrayages, 80009 Amiens Cedex 2 (FR)
(72) Inventeur: MAUREL, Hervé, F-80000 Amiens (FR); DELEVALLEE, Jean-Louis, F-80090 Amiens (FR)
(74) Mandataire: Tran, Chi-Hai
(86) Numéro de dépôt international: PCT/FR2010/050170
(87) Numéro de publication internationale: WO 2010/092278

(56) Documents cités:
- EP-A- 0 420 738
- EP-A- 0 699 844
- EP-A- 1 703 160
- FR-A- 2 559 562

## Description

L'invention se rapporte à un mécanisme de commande pour un système d'embrayage à friction de véhicule automobile.

L'invention se rapporte plus particulièrement à un mécanisme de commande pour un système d'embrayage à friction de véhicule automobile qui comporte :
- un levier d'actionnement qui est monté pivotant autour d'un axe transversal par l'intermédiaire d'une articulation et qui comporte deux bras de levier dont chacun présente une longueur fixe ;
- une butée d'actionnement de l'embrayage qui est montée coulissante longitudinalement sur une course d'embrayage délimitée par une position extrême de sollicitation de l'embrayage et une position extrême de repos ;
- un actionneur comportant une tige longitudinale coulissante qui est destinée à pousser longitudinalement le premier bras de levier pour faire coulisser la butée d'actionnement par l'intermédiaire du deuxième bras de levier ;
- un dispositif de rattrapage de jeu longitudinal de l'embrayage, notamment de l'usure de garnitures de friction, qui est commandé de manière à décaler longitudinalement la butée d'actionnement pour que la distance de la course d'embrayage de la butée d'actionnement demeure sensiblement constante.

Les systèmes d'embrayage à friction comportent au moins un disque de friction muni de garniture sur ses deux faces. Le disque de friction est susceptible d'être serré contre un plateau de réaction par un plateau de serrage. Le plateau de serrage est ainsi susceptible d'être coulissé entre une position embrayée et une position débrayée.

Les systèmes d'embrayage peuvent être de type dit "normalement ouvert". Dans ce cas, le système d'embrayage comporte un élément, tel qu'un diaphragme, qui rappelle élastiquement le plateau de pression vers une position extrême de débrayage.

Les systèmes d'embrayage peuvent aussi être de type dit "normalement fermé". Dans ce cas, le système d'embrayage comporte un élément, tel qu'un diaphragme, qui rappelle élastiquement le plateau de pression vers une position extrême d'embrayage.

Dans les deux cas, le plateau de pression est mobile entre une position extrême de repos vers laquelle il est rappelé par le diaphragme, et une position extrême de contrainte vers laquelle il est poussé à l'encontre de la force de rappel élastique du diaphragme par une butée d'actionnement coulissante longitudinalement.

Ce type de système d'embrayage est généralement commandé par un mécanisme de commande équipé d'un actionneur qui comporte un moto-réducteur électrique qui entraîne en translation un élément menant, tel par exemple qu'une tige de poussée, agissant sur la butée d'actionnement par l'intermédiaire d'un levier. Le levier est généralement appelé "fourchette".

Lorsque l'actionneur est du type à compensation d'effort, il comprend en général un ressort de compensation qui agit sur une came ou une rampe inclinée solidairement en coulissement longitudinal de la tige de poussée pour solliciter la tige de poussée dans le sens correspondant à l'état contraint du plateau de pression. Le ressort de compensation et la rampe inclinée sont conçus de manière que l'effort exercé par le ressort de compensation sur la tige de poussée équilibre approximativement l'effort de rappel élastique du diaphragme, de sorte que l'effort fourni par le moto-réducteur pour l'actionnement de l'embrayage est réduit à une valeur minimale.

La course d'embrayage "d0" que doit parcourir le plateau d'embrayage entre sa position extrême d'embrayage et sa position extrême de débrayage est définie par rapport à la position extrême d'embrayage du plateau de pression.

Or, l'usure des garnitures de friction de l'embrayage se traduit par un décalage de la position extrême d'embrayage du plateau de pression pour compenser la perte d'épaisseur longitudinale du disque de friction. La position extrême de débrayage n'étant pas décalée dans le même temps, ceci entraîne une distance de déplacement plus longue de la butée d'actionnement, et donc de la tige de poussée, et, par conséquent, une modification de la course de commande de la tige de poussée.

Le système de compensation d'effort se trouve alors déséquilibré, ce qui implique une modification plus ou moins importante, selon les réalisations, de l'effort de commande que doit fournir l'actionneur pour déplacer la butée d'actionnement à l'encontre du diaphragme.

On a déjà proposé de nombreux dispositifs de rattrapage d'usure qui sont en général intégrés à l'embrayage pour compenser l'usure des garnitures de friction au fur et à mesure qu'elle se produit, de sorte que cette usure n'a plus d'effet sur la position de la butée d'actionnement et sur la course de commande de la tige de poussée. Plus particulièrement, le dispositif de rattrapage a pour fonction de décaler la position extrême de débrayage dans la même direction et de la même distance que le décalage de la position extrême d'embrayage.

Ces dispositifs connus sont toutefois relativement complexes et leur fonctionnement se révèle souvent peu précis et peu fiable en pratique.

On connaît aussi, notamment par le document FR-A-2.901.587, un dispositif de rattrapage d'usure 30 qui est représenté schématiquement à la figure 1. On a représenté de manière simplifiée par des boîtes le système d'embrayage 32, l'actionneur 34 et le dispositif de compensation d'effort 36. La course de la butée d'actionnement (non représentée) couvre une distance "d0".

Le mouvement de l'actionneur 34 est transmis à la butée d'actionnement par l'intermédiaire d'un levier 40 monté pivotant autour d'une articulation 42 fixe par rapport à l'actionneur 34 et par rapport au système d'embrayage 32.

Le dispositif de rattrapage d'usure 30 a pour fonction de régler la longueur de la tige de poussée 38 en fonction de l'usure des garnitures du système d'embrayage 32 de telle sorte que ce réglage de longueur compense le décalage "d1" de la course de la butée d'actionnement qui est dû à l'usure des garnitures.

Cependant, un tel dispositif 30 est encombrant car il est nécessaire de prévoir un espace libre relativement important pour permettre l'allongement maximal "d1" de la tige de poussée en plus de la course de commande "d0". En d'autres termes, la course de commande de l'extrémité libre de la tige de poussée 38 est décalée de la distance d'usure "d1", mais la distance "d0" de la course de commande de la tige d'actionnement 38 reste constante.

De plus, cette augmentation de la longueur de la tige de poussée 38 se répercute, parfois en étant amplifiée, sur les éléments de la chaîne de transmission du mouvement de l'actionneur 34 jusqu'à la butée d'actionnement. La zone balayée par le débattement angulaire du levier 40 est notamment décalée au fur et à mesure de l'allongement de la tige de poussée 38, ce qui requiert de prévoir un espace libre "d1" pour permettre le débattement maximal du levier quel que soit le degré d'usure des garnitures

En outre, les dispositifs de rattrapage d'usure connus ne sont pas susceptibles de permettre de rattraper les jeux de fabrication ou de montage en sus des jeux d'usure.

Il est également connu du document EP 0 420 738 un mécanisme de commande pour système d'embrayage à friction du type décrit précédemment dans lequel l'articulation du levier est montée mobile longitudinalement, et dans lequel le dispositif de rattrapage de jeu agit sur la position longitudinale de l'articulation du levier pour rattraper le jeu longitudinal, le dispositif de rattrapage étant commandé par l'actionneur.

La présente invention propose un mécanisme de commande du type décrit précédemment, dans lequel l'articulation du levier est montée mobile longitudinalement, et dans lequel le dispositif de rattrapage de jeu agit sur la position longitudinale de l'articulation du levier pour rattraper le jeu longitudinal, le dispositif de rattrapage étant commandé par l'actionneur caractérisé en ce que dispositif de rattrapage comporte des moyens de transmission du mouvement de la tige de poussée jusqu'a l'articulation.

Selon d'autres caractéristiques de l'invention :
- la tige de poussée est mobile sur un trajet qui est divisé en deux courses non chevauchantes :
   ● une première course de commande qui permet d'agir sur la butée d'actionnement pour commander l'embrayage à friction, la butée d'actionnement étant rappelée élastiquement vers sa position extrême de repos correspondant à une position de repos de la tige de poussée ;
   ● et une deuxième course de réglage qui prolonge la première course au-delà de la position de repos de la tige de poussée et le long de laquelle l'actionneur commande le dispositif de rattrapage par l'intermédiaire des moyens de transmission sans agir sur l'état de l'embrayage.
- l'articulation du levier est portée par une roue dentée transversale qui est vissée sur une vis longitudinale montée fixe longitudinalement par rapport à l'actionneur, la rotation de la roue dentée dans une première direction permettant de déplacer l'articulation dans le sens d'avance et la rotation de la roue dentée dans une deuxième direction opposée permettant de déplacer l'articulation dans le sens de recul ;
- les moyens de transmission comportent :
   ● - au moins un premier chemin longitudinal de came qui est solidaire en coulissement longitudinal de la tige de poussée et qui comporte un bossage ;
   ● - au moins un premier suiveur de came qui est associé au premier chemin de came et qui porte un cliquet qui est apte à entraîner la roue dentée en rotation uniquement dans une direction associée lors du passage du bossage au droit du suiveur de came associé de manière à commander le coulissement de l'articulation pour diminuer le décalage créé par l'usure des garnitures de friction.
- les moyens de transmission comportent :
   ● - un deuxième chemin longitudinal de came qui est parallèle au premier chemin de came, qui est solidaire en coulissement longitudinal de la tige de poussée et qui comporte un bossage ;
   ● - un deuxième suiveur de came qui est associé au deuxième chemin de came et qui porte un cliquet qui est apte à entraîner la roue dentée en rotation uniquement dans une direction associée lors du passage du bossage au droit du suiveur de came associé de manière à commander le coulissement de l'articulation dans un sens opposé à celui du premier suiveur de came ;
- chaque suiveur de came est monté mobile entre :
   ● - une position de repos dans laquelle le cliquet n'interfère pas avec la rotation de la roue dentée et vers laquelle il est rappelé élastiquement ; et
   ● - une position active dans laquelle le cliquet entraîne la rotation de la roue dentée d'un pas dans la direction associée afin de déplacer l'articulation ;
- les chemins de came sont conformés de manière que le premier suiveur de came soit actionné avant le deuxième suiveur de came lorsque la tige de poussée se déplace le long de sa course de réglage depuis sa position de repos ;
- les moyens de transmission comportent :
   ● - un arbre vertical d'entraînement de la roue dentée en rotation au moyen d'une vis sans fin, l'extrémité supérieure de l'arbre d'entraînement étant munie d'un pignon d'entraînement ;
   ● - un cliquet comportant au moins une dent de réglage qui est monté coulissant solidairement avec la tige de poussée, le cliquet étant monté basculant par rapport à la tige de poussée entre une première position angulaire stable dans laquelle la dent de recul est susceptible d'engrener le pignon de l'arbre pour le faire tourner lors du coulissement de la tige de poussée dans un premier sens actif le long de la course de réglage, et vers laquelle il est forcé élastiquement et une deuxième position angulaire dans laquelle la dent de recul est escamotée par contact avec les dents du pignon lors du coulissement du cliquet dans un premier sens passif.
- le cliquet comporte une deuxième dent d'avance qui est escamotée dans la première position angulaire stable du cliquet par contact avec les dents du pignon lors du coulissement du cliquet dans un deuxième sens passif, le deuxième dent d'avance étant susceptible d'engrener le pignon de l'arbre pour le faire tourner lorsque le cliquet est dans sa deuxième position angulaire et lorsque le cliquet coulisse dans un deuxième sens actif, et le cliquet étant forcé élastiquement dans sa deuxième position angulaire ; le cliquet étant commandé dans l'une ou l'autre de ses positions angulaires stable par butée à chaque extrémité de la course de réglage pour permettre de provoquer l'entraînement en rotation de l'arbre d'entraînement par coulissement du cliquet dans un sens actif en direction de l'autre extrémité de la course de réglage ;
- le sens actif de coulissement du cliquet qui commande le coulissement de l'articulation pour la diminution du décalage dû à l'usure des garnitures de friction correspond au sens de coulissement de la tige de poussée sur sa course de commande en direction de sa position de repos.

L'invention concerne aussi un procédé de commande du mécanisme de commande réalisé selon les enseignements de l'invention, caractérisé en ce qu'il comporte :
- une étape préalable de détection d'un décalage entre une position de référence de la tige de poussée et une position de référence du système d'embrayage au cours de laquelle un premier signal représentatif de la position de la tige de poussée et un deuxième signal représentatif de l'état du système d'embrayage sont envoyés à une unité électronique de traitement pour comparaison ;
- une phase de commande de l'actionneur qui est déclenchée lorsque le décalage détecté lors de la première étape excède une valeur déterminée et lorsque la butée d'actionnement est dans sa position de repos, et au cours de laquelle l'actionneur est commandé par l'unité électronique de commande de manière à déplacer l'articulation afin de diminuer le décalage détecté.

D'autres caractéristiques et avantages de l'invention apparaîtront à la lecture de la description détaillée qui va suivre, pour la compréhension de laquelle on se reportera aux dessins annexés, parmi lesquels :
- la figure 1 est une vue schématique de côté qui représente le principe de fonctionnement d'un dispositif de rattrapage de jeu réalisé selon l'art antérieur appliqué à un système d'embrayage à friction ;
- la figure 2 est une vue en coupe axiale qui représente schématiquement un système d'embrayage à friction équipé d'un actionneur muni d'un dispositif de rattrapage de jeu réalisé selon les enseignements de l'invention ;
- la figure 3 est une vue de côté à grande échelle qui représente l'actionneur et le dispositif de rattrapage de jeu réalisé selon un premier mode de réalisation de l'invention ;
- la figure 4 est une vue en perspective éclatée qui représente l'actionneur de la figure 3 et une partie de la chaîne de transmission du mouvement de l'actionneur jusqu'au dispositif de rattrapage de jeu réalisé selon le premier mode réalisation de l'invention ;
- la figure 5 est une vue en perspective qui représente l'actionneur et le levier articulé sur le dispositif de rattrapage de la figure 3 ;
- la figure 6 est une vue schématique à celle de la figure 5 qui représente l'actionneur sans le levier articulé ;
- la figure 7 est une vue schématique similaire à celle de la figure 1 qui représente le fonctionnement du dispositif de rattrapage de jeu réalisé selon les enseignements de l'invention ;
- la figure 8 est un schéma qui représente les différentes courses de déplacement longitudinale de l'extrémité libre de la tige de poussée de l'actionneur, et notamment la course de réglage pour le dispositif de rattrapage selon le premier mode de réalisation de l'invention ;
- la figure 9 est une vue en perspective éclaté qui représente le dispositif de rattrapage de jeu selon le premier mode de réalisation de l'invention ;
- la figure 10 est une vue similaire à celle de la figure 10 dans laquelle le dispositif de rattrapage de jeu est fixé à un couvercle du boîtier d'actionneur ;
- la figure 11 est une vue en perspective éclatée et à plus grande échelle qui représente un coulisseau à cliquet du dispositif de rattrapage de jeu de la figure 9 ;
- la figure 12 est une vue similaire à celle de la figure 11 dans laquelle le coulisseau à cliquet est assemblé ;
- la figure 13 est une vue de côté qui représente des fenêtres réalisées dans le coulisseau à cliquet ;
- les figures 14A à 20A sont des vues de dessus en coupe selon le plan de coupe A-A de la figure 11 qui représente le coulisseau à cliquet dans diverses positions lors de la mise en oeuvre du dispositif de rattrapage de jeu selon le premier mode de réalisation ;
- les figures 14B à 20B sont des vues de dessus en coupe selon le plan de coupe B-B de la figure 11 qui représente le coulisseau à cliquet dans diverses positions lors de la mise en oeuvre du dispositif de rattrapage de jeu selon le premier mode de réalisation ;
- la figure 21 est un schéma analogue à celui de la figure 8 qui représente les différentes courses de déplacement longitudinale de l'extrémité libre de la tige de poussée de l'actionneur, et notamment la course de réglage pour le dispositif de rattrapage selon un deuxième mode de réalisation de l'invention ;
- la figure 22 est une vue de côté qui représenté l'actionneur et un dispositif de réglage de jeu selon un deuxième mode de réalisation de l'invention ;
- la figure 23 est une vue de détail en perspective qui représente la face inférieure de la tête de chariot de l'actionneur présentant deux chemins de came ;
- la figure 24 est une vue en perspective qui représente les éléments situés à l'intérieur de l'actionneur, ainsi que le dispositif de rattrapage de jeu selon le deuxième mode de réalisation.

Dans la suite de la description et dans les revendications, on adoptera à titre non limitatif des directions longitudinale, orientée d'arrière en avant, verticale, orientée de bas en haut, et transversale, orientée de gauche à droite indiquées par le trièdre "L,V,T" des figures. La direction longitudinale est choisie comme étant parallèle à l'axe de rotation "A" du système d'embrayage.

Dans la description qui va suivre, des numéros de référence identiques désignent des pièces identiques ou ayant des fonctions similaires.

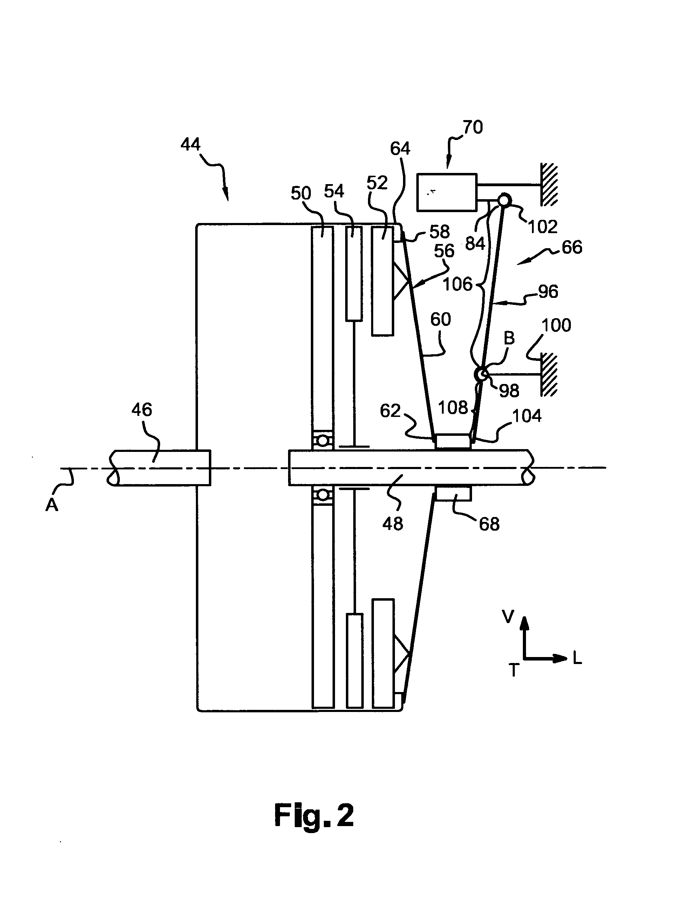

On a représenté à la figure 2 un système d'embrayage 44 à friction qui est destiné à accoupler un arbre moteur 46 qui est agencé longitudinalement vers l'arrière et dont un tronçon d'extrémité avant libre est représenté à gauche à la figure 2, avec au moins un arbre mené 48 qui est agencé vers l'avant.

L'arbre moteur 46 est rotatif autour d'un axe de rotation "A" et il est entraîné en rotation par un moteur (non représenté) du véhicule automobile.

L'arbre mené 48 est monté rotatif sensiblement coaxialement à l'arbre moteur 46. L'arbre mené 48 est relié à une boîte de vitesses arrière (non représentée).

Le système d'embrayage 44 comporte des moyens d'accouplement temporaire de l'arbre mené 48 avec l'arbre moteur 46.

De manière connue, le système d'embrayage 44 comporte un plateau radial circulaire de réaction 50 qui est monté libre en rotation autour de l'axe de rotation "A". Le plateau de réaction 50 est porté par le tronçon d'extrémité arrière de l'arbre mené 48 par l'intermédiaire d'un roulement à billes. Le plateau de réaction 50 est plus particulièrement monté fixe longitudinalement par rapport à l'arbre mené 48. Par ailleurs, le plateau de réaction 50 est solidaire en rotation de l'arbre moteur 46.

Les moyens d'accouplement comportent aussi un plateau annulaire avant de pression 52 qui est monté solidaire en rotation du plateau de réaction 50 autour de l'axe de rotation "A" et il est monté coulissant longitudinalement par rapport au plateau de réaction 50. Le plateau de pression 52 est plus particulièrement agencé longitudinalement en vis-à-vis d'une face avant du plateau de réaction 50.

Un disque coaxial de friction 54 est interposé longitudinalement entre le plateau de réaction 50 et le plateau de pression 52. Le disque de friction 54 comporte sur ses deux faces une garniture annulaire de friction. Le disque de friction 54 est monté solidaire en rotation de l'arbre mené 48, et il est monté coulissant longitudinalement sur l'arbre mené 48.

Le plateau de pression 52 est destiné à être commandé entre une position extrême arrière d'embrayage dans laquelle le disque de friction 54 est serré contre la face avant du plateau de réaction 50 par le plateau de pression 52 pour accoupler temporairement l'arbre mené 48 avec l'arbre moteur 46, et une position extrême avant de débrayage dans laquelle le disque de friction 54 est écarté longitudinalement à la fois du plateau de réaction 50 et du plateau de pression 52.

Le plateau de pression 52 est aussi susceptible d'occuper une position intermédiaire de léchage dans laquelle le disque de friction 54 est en contact avec le plateau de pression 52 et le plateau de réaction 50 en étant serré avec glissement de manière qu'une partie du couple de l'arbre moteur 46 commence à être transmise à l'arbre mené 48. Lorsque le plateau de pression 52 occupe une position longitudinale comprise entre la position intermédiaire de léchage et la position extrême avant de débrayage, aucun couple n'est transmis à l'arbre mené 48.

De manière connue, le système d'embrayage 44 comporte aussi un diaphragme 56 annulaire coaxial arrière d'actionnement du plateau de pression 52. Le diaphragme 56 comporte un anneau 58 radialement extérieur depuis lequel des rayons 60 élastiques s'étendent radialement vers l'axe de rotation "A" jusqu'à une extrémité intérieure libre 62. Tous les rayons 60 sont ici identiques.

L'anneau 58 du diaphragme 56 est fixé sur une face avant d'un couvercle arrière 64 fixe par rapport au plateau de réaction 50. Une portion intermédiaire de chaque rayon 60 du diaphragme 56 est en appui axial sur une portion annulaire du plateau de pression 52.

Les rayons 60 du diaphragme 56 sont flexibles élastiquement. Le diaphragme 56 est par exemple réalisé en un acier présentant des propriétés d'élasticité adaptées.

Le système d'embrayage 44 comporte un mécanisme de commande 66 du plateau de pression 52 entre sa position extrême d'embrayage et sa position extrême de débrayage.

Le mécanisme de commande 66 comporte une butée annulaire d'actionnement 68 de l'embrayage qui est montée autour de l'arbre mené 48 coulissante longitudinalement par rapport au diaphragme 56 sur une course d'embrayage qui est délimitée par une position extrême arrière de sollicitation dans laquelle elle sollicite axialement vers l'arrière l'extrémité intérieure libre 62 des rayons 60 du diaphragme 56 pour amener le plateau de pression 52 dans sa position extrême arrière d'embrayage, et une position extrême avant de repos vers laquelle la butée d'actionnement 68 est rappelée élastiquement par les rayons 60 du diaphragme 56 et qui correspond ici à la position extrême de débrayage du plateau de pression 52.

Les rayons 60 du diaphragme 56 fonctionnent ainsi à la manière d'un levier qui pousse le plateau de pression 52 vers sa position extrême d'embrayage lorsque l'extrémité libre 62 des rayons 60 du diaphragme 56 est sollicitée par la butée d'actionnement 68.

Selon une variante non représentée de l'invention, le plateau de pression est agencé en arrière du plateau de réaction, et le diaphragme est agencé de manière à "tirer" le plateau de pression vers le plateau de réaction au lieu de le pousser.

Dans le mode de réalisation représenté à la figure 2, la position extrême avant de repos de la butée d'actionnement 68 correspond à la position extrême de débrayage du plateau de pression 52. Un tel système d'embrayage 44 est dit "normalement ouvert".

Selon une variante non représentée de l'invention, la position extrême avant de repos de la butée d'actionnement correspond à la position extrême d'embrayage du plateau de pression. Le système d'embrayage est alors dit "normalement fermé".

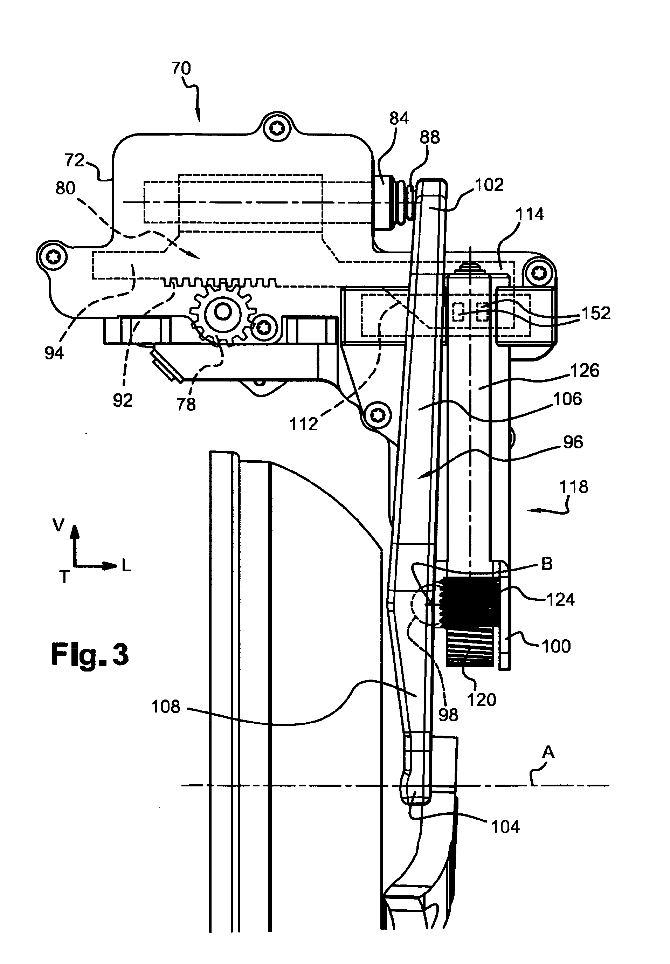

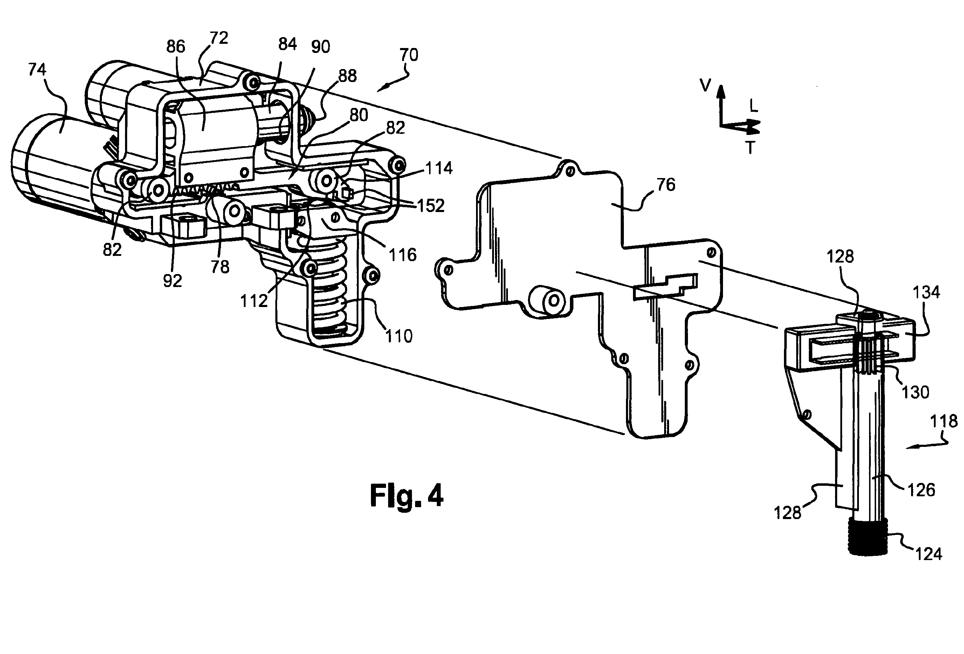

Comme représenté en détail aux figures 3 et 4, le mécanisme de commande 66 comporte aussi un actionneur 70 qui est destiné à commander le coulissement de la butée d'actionnement 68.

L'actionneur 70 comporte un boîtier 72 sur une face latérale longitudinale duquel est fixé un moto-réducteur électrique 74 et dont l'autre face latérale longitudinale est fermée par un couvercle 76 plan. Comme représenté à la figure 2, le boîtier 72 est fixé verticalement au-dessus de la butée d'actionnement 68 sur un support fixe par rapport au plateau de réaction 50, par exemple sur une paroi de la boîte de vitesses.

Le moto-réducteur 74 est susceptible d'entraîner en rotation un pignon moteur 78 qui est monté rotatif autour d'un axe transversal à l'intérieur du boîtier 72.

Le boîtier 72 renferme aussi un chariot 80 en forme de barre d'axe globalement longitudinal qui est monté coulissant longitudinalement à l'intérieur du boîtier 72 par l'intermédiaire de galets de guidage 82 qui sont destinés à rouler sur des parois longitudinales transversales associées du boîtier 72.

Une tige de poussée 84 d'axe longitudinal est fixée sur le chariot 80. La tige de poussée 84 s'étend longitudinalement au-dessus du chariot 80 depuis un manchon de fixation 86 arrière sur le chariot 80 jusqu'à une extrémité avant libre 88 hémisphérique formant rotule destinée à coopérer avec l'extrémité supérieure d'un levier 96. L'extrémité libre 88 est agencé à l'extérieur du boîtier 72 par passage de la tige de poussée 84 à travers un orifice de passage 90.

L'extrémité avant libre 88 de la tige de poussée 84 est susceptible de coulisser longitudinalement à l'extérieur du boîtier 72 le long d'une course de commande entre une position arrière de repos et une position extrême avant de sollicitation.

Des crans 92 formant crémaillère sont réalisés dans une face inférieure d'une queue 94 arrière du chariot 80 de manière à engrener le pignon moteur 78. Ainsi, la rotation du pignon moteur 78 commande le coulissement longitudinal dans les deux sens de l'ensemble solidaire formé par le chariot 80 et la tige de poussée 84.

La tige de poussée 84 est plus particulièrement agencée verticalement au-dessus de la butée d'actionnement 68.

La rotation du pignon moteur 78 du moto-réducteur 74 électrique est commandée par une unité électronique de commande (non représentée).

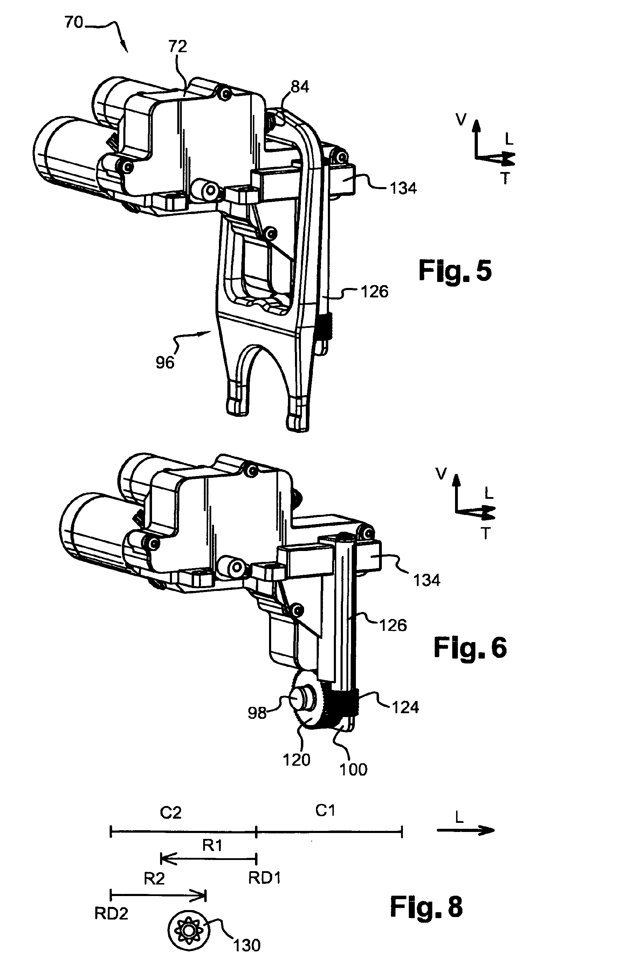

Un levier d'actionnement 96 d'orientation globalement verticale est monté pivotant autour d'un axe transversal "B" par une articulation 98, telle qu'un pivot ou une rotule, qui est portée par un support 100 fixe par rapport au boîtier 72 de l'actionneur 70. Comme représenté à la figure 6, l'articulation 98 est ici formée par une rotule 98 qui est portée par le support fixe 100 et qui coopère avec une cavité (non représentée) du levier 96.

Comme illustré aux figures 3 et 5, le levier 96 est agencé de manière que l'extrémité libre 88 de la tige de poussée 84 sollicite un premier point d'appui 102 du levier 96 et de manière qu'un deuxième point d'appui 104 du levier 96 sollicite la butée d'actionnement 68 vers sa position arrière de sollicitation en réponse à la sollicitation de la tige de poussée 84.

Le premier point d'appui 102 est ici agencé à l'extrémité supérieure libre du levier 96, tandis que le deuxième point d'appui 104 est agencé à l'extrémité inférieure libre bifide du levier 96.

L'articulation 98 du levier 96 est ici agencée verticalement entre la butée d'actionnement 68 et la tige de poussée 84. Il s'agit ainsi d'un levier dit "du premier type" ou "à bascule" dans lequel l'articulation 98 est agencée entre le premier point d'appui 102 et le deuxième point d'appui 104 de manière que la force appliquée par la tige de poussée 84 sur le levier 96 soit transmise à la butée d'actionnement 68 avec changement de sens.

La position extrême avant de sollicitation de l'extrémité libre 88 de la tige de poussée 84 correspond ainsi à la position extrême arrière de sollicitation de la butée d'actionnement 68, tandis que la position arrière de repos de l'extrémité avant 88 de la tige de poussée 84 correspond à la position extrême avant de repos de la butée d'actionnement 68.

Le levier 96 comporte ainsi un premier bras de levier 106 qui s'étend globalement verticalement vers le haut depuis l'articulation 98 jusqu'au premier point d'appui 102 et un deuxième bras de levier 108 qui s'étend globalement verticalement vers le bas depuis l'articulation 98 jusqu'au deuxième point d'appui 104.

Selon une variante non représentée de l'invention, l'articulation du levier n'est pas agencée entre les deux points d'application. Les deux bras de levier s'étendent alors verticalement dans le même sens depuis l'articulation et la force appliquée au levier par la tige de poussée est transmise sans changement de sens à la butée d'actionnement.

L'articulation 98 est fixe verticalement par rapport au levier 96 de manière que chaque bras de levier 106, 108 présente une longueur fixe. L'articulation 98 est aussi fixe verticalement par rapport au boîtier d'actionneur 72.

Ainsi, lors de l'utilisation du système d'embrayage 44, l'actionneur 70 est commandé de manière que l'extrémité libre 88 de la tige de poussée 84 se déplace longitudinalement vers sa position avant de sollicitation en poussant le premier bras de levier 106. Cette sollicitation fait pivoter le levier 96 autour de son axe de pivotement "B" dans un sens horaire en se référant à la figure 3. Le levier 96 transmet alors ce mouvement à la butée d'actionnement 68 qui est poussée longitudinalement vers sa position arrière de sollicitation à l'encontre de l'effort de rappel élastique du diaphragme 56 de manière à solliciter les rayons 60 du diaphragme 56 pour serrer le plateau de pression 52 contre le plateau de réaction 50 avec interposition du disque de friction 54.

Ainsi, la tige de poussée 84 pousse longitudinalement le premier bras de levier 106 pour faire coulisser la butée d'actionnement 68 par l'intermédiaire du deuxième bras de levier 108.

Inversement, lorsque l'extrémité libre 88 de la tige de poussée 84 est commandée longitudinalement vers sa position arrière de repos, les rayons 60 du diaphragme 56 exercent un effort longitudinal élastique de rappel de la butée d'actionnement 68 vers sa position de repos. Ce faisant, la butée d'actionnement 68 pousse le deuxième bras de levier 108 de manière à faire pivoter le levier 96 dans un sens antihoraire, plaquant ainsi le premier bras de levier 106 contre l'extrémité libre 88 de la tige de poussée 84.

L'actionneur 70 comporte aussi des moyens de compensation qui sont destinés à équilibrer l'effort élastique exercé par les rayons 60 du diaphragme 56 sur la tige de poussée 84 par l'intermédiaire du levier 96. Les moyens de compensation sont notamment visibles à la figure 4.

Les moyens de compensation comportent ici un ressort de compensation 110 qui agit sur une rampe inclinée 112 liée à la tige de poussée 84 pour solliciter la tige de poussée 84 à l'encontre de l'effort élastique de rappel du diaphragme 56. Le ressort de compensation 110 et la rampe inclinée 112 sont conçus de manière que l'effort exercé par le ressort de compensation 110 sur la tige de poussée 84 équilibre approximativement l'effort de rappel élastique du diaphragme 56 pour toutes les positions de la butée d'actionnement 68 entre ses deux positions extrêmes. Ainsi l'effort fourni par le moto-réducteur 74 pour l'actionnement du système d'embrayage 44 est réduit à une valeur minimale.

La rampe inclinée 112 des moyens de compensation est formée par la face inférieure d'une tête d'extrémité avant 114 du chariot 80. Le ressort de compensation 110 est agencé contraint verticalement à l'intérieur du boîtier 72 et au-dessous de la tête avant 114 du chariot 80 de manière que son extrémité inférieure prenne appui sur une paroi inférieure du boîtier 72 tandis que son extrémité supérieure sollicite verticalement vers le haut la rampe inclinée 112 du chariot 80 par l'intermédiaire d'un suiveur de came à galet 116 qui est monté coulissant verticalement dans le boîtier 72.

Le système d'embrayage 44 comporte aussi un dispositif 118 de rattrapage de jeu longitudinal de l'embrayage, notamment dû à l'usure des garnitures de friction, qui est commandé de manière que la distance "d0" de la course d'embrayage de la butée d'actionnement 68 demeure sensiblement constante indépendamment de l'usure des garnitures de friction.

La course d'embrayage "d0" est définie par rapport à la position extrême d'embrayage du plateau de pression 52, correspondant ici à la position extrême arrière de sollicitation de la butée d'actionnement 68. Cette position extrême d'embrayage se décale longitudinalement d'une distance d'usure "d1", ici vers l'arrière, à mesure de l'usure des garnitures.

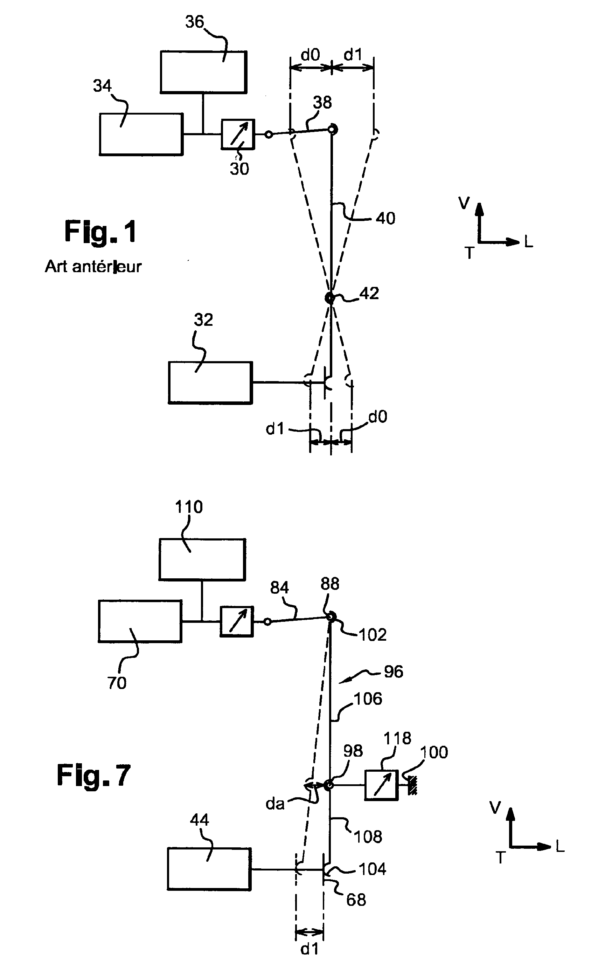

Selon les enseignements de l'invention, l'articulation 98 du levier 96 est montée mobile longitudinalement, et le dispositif de rattrapage de jeu 118 agit sur la position longitudinale de l'articulation 98 du levier 96 pour rattraper le jeu longitudinal. Ce principe est illustré à la figure 7. Ceci permet d'effectuer un décalage "d1" de la course d'embrayage de la butée d'actionnement 68 sans décaler la course de commande de l'extrémité libre 88 de la tige de poussée 84. Ainsi, la longueur de tige de poussée 84 est fixe et la position de l'extrémité libre 88 de la tige de poussée 84 est fixe par rapport au chariot 80.

Lors de l'action sur la position longitudinale de l'articulation 98, le levier 96 se comporte alors comme un levier dit du "troisième type" qui pivote autour de son premier point d'appui 102 supérieur sous l'impulsion du coulissement de l'articulation 98 en déplaçant longitudinalement son deuxième point d'appui 104 inférieur du jeu longitudinal. Ce rattrapage est réalisé lorsque la tige de poussée 84 est en position de repos. Ainsi, le premier point d'appui supérieur 102 du levier 96 est fixe lors de l'opération de rattrapage.

Lors de ce mouvement, on constate que le déplacement du point d'appui inférieur 104 du levier 96 est démultiplié par rapport au déplacement de l'articulation 98.

Un tel dispositif de rattrapage de jeu 118 est très avantageux car il est très peu encombrant. En effet, l'extrémité libre 88 de la tige de poussée 84 se déplace toujours le long de la même course de commande, sans décalage à mesure de l'usure des garnitures, et l'espace balayé longitudinalement par l'extrémité supérieure 102 du levier 96 est toujours le même quel que soit l'état d'usure des garnitures.

De plus, du fait de la géométrie du levier 96, la distance maximale de décalage "da" à prévoir pour l'articulation 98 est très faible par rapport à la distance maximale de décalage "d1" à prévoir pour la course d'embrayage de l'extrémité inférieure 104 du levier 96 en fonction de l'usure maximale des garnitures de friction.

Dans les exemples représentés aux figures, le dispositif de rattrapage de jeu 118 est commandé par l'actionneur 70. A cet effet, le dispositif de rattrapage 118 comporte des moyens de transmission du mouvement de la tige de poussée 84 jusqu'à l'articulation 98.

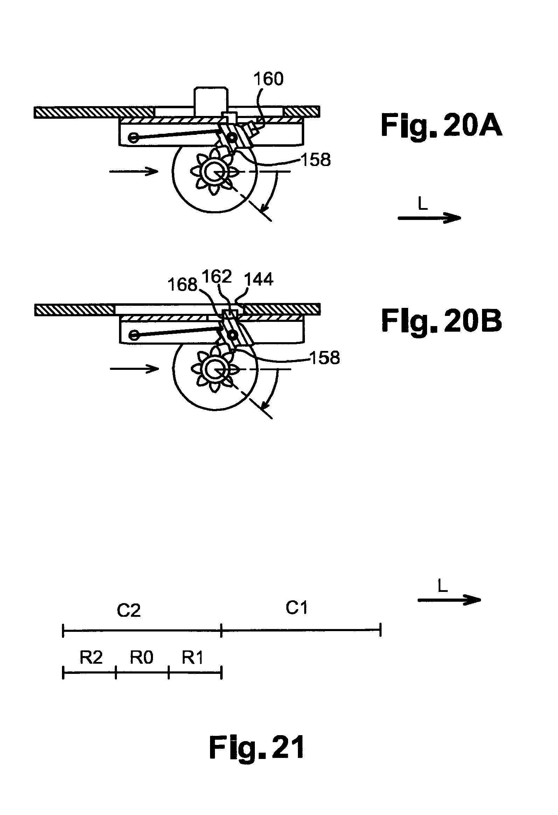

Dans les modes de réalisation représentés aux figures, l'actionneur 70 est réalisé de manière à commander le dispositif de rattrapage 118 lorsque le système d'embrayage 44 est dans son état de repos, correspondant ici à la position extrême de repos du plateau de pression 52. A cet effet, comme illustré aux figures 8 et 21, l'extrémité libre 88 de la tige de poussée 84, et donc le chariot 80, est mobile sur un trajet qui est divisé en deux courses non chevauchantes :
- une première course de commande "C1" entre une position arrière de repos telle que représentée à la figure 3, et une position extrême avant de sollicitation (non représentée) qui permet d'agir sur la butée d'actionnement 68 pour commander le système d'embrayage 44 ;
- et une deuxième course de réglage "C2" qui prolonge la première course de commande vers l'arrière entre la position arrière de repos et une position extrême arrière de la tige de poussée 84, et le long de laquelle l'actionneur 70 commande le dispositif de rattrapage 118 par l'intermédiaire des moyens de transmission sans agir sur l'état du système d'embrayage 44.

Le long de la deuxième course de réglage "C2", l'extrémité libre 88 de la tige de poussée 84 est à l'extérieur du boîtier 72.

Ainsi, l'actionneur 70 est conçu de manière que la tige de poussée 84 puisse aussi coulisser longitudinalement vers l'arrière en deçà de sa position arrière de repos.

Lorsque la tige de poussée 84 parcourt la deuxième course de réglage "C2", le levier 96 est basculé dans un sens antihoraire, selon la figure 3, en permettant à la butée d'actionnement 68 de coulisser longitudinalement vers l'avant au-delà de sa position extrême de repos sous l'effet de l'effort élastique des rayons 60 du diaphragme 56. Ce coulissement de la butée d'actionnement 68 n'a aucune influence sur l'état du système d'embrayage 44.

Selon une variante de l'invention, lorsque la tige de poussée 84 parcourt la deuxième course de réglage "C2", l'extrémité libre 88 de la tige de poussée 84 s'écarte du levier 96 de manière que le levier 96 reste immobile.

On a représenté aux figures 3 à 6 et 8 à 20 un premier mode de réalisation des moyens de transmission du mouvement.

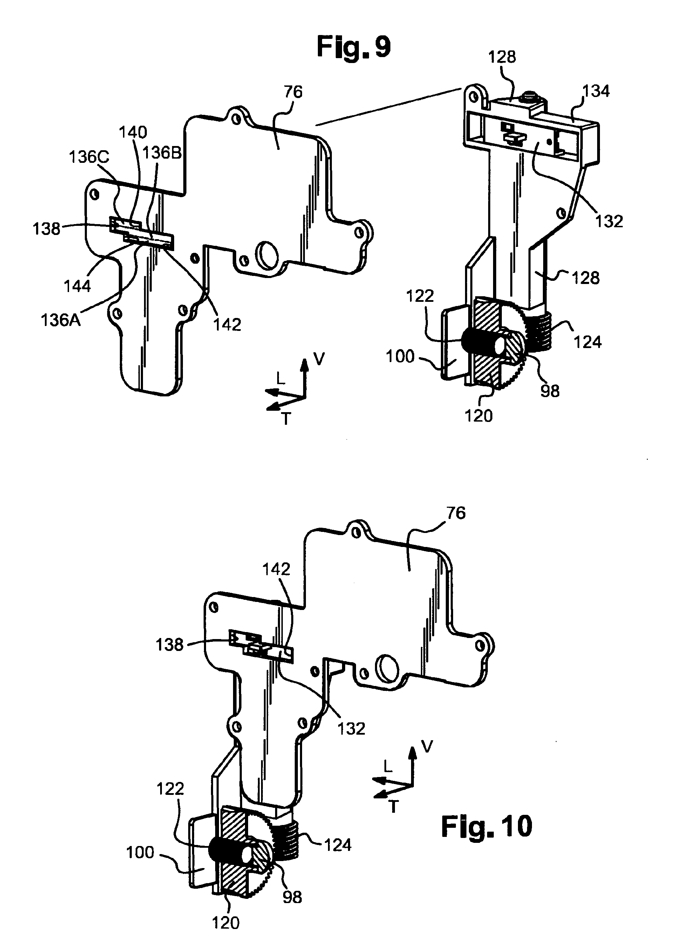

Selon ce premier mode de réalisation et comme représenté aux figures 9 et 10, la rotule d'articulation 98 du levier 96 s'étend longitudinalement en saillie vers l'arrière depuis le centre d'une roue dentée 120. La roue dentée 120 comporte un taraudage central qui est ouvert longitudinalement vers l'avant.

La roue dentée 120 est vissée sur une vis 122 longitudinale qui s'étend longitudinalement vers l'arrière depuis le support 100 qui est fixe au moins longitudinalement par rapport au boîtier 72 de l'actionneur 70. Le support 100 transversal vertical est ici fixé rigidement au boîtier 72 de l'actionneur 70.

Ainsi, la rotation de la roue dentée 120 dans une première direction de vissage permet de déplacer la roue dentée 120, et donc l'articulation 98, dans un sens d'avance et la rotation de la roue dentée 120 dans une deuxième direction opposée de dévissage permet de déplacer longitudinalement la roue dentée 120, et donc l'articulation 98, dans un sens de recul.

Selon une variante non représentée, c'est la vis qui porte la rotule d'articulation. Dans ce cas, la vis est coulissante longitudinalement et bloquée en rotation par rapport à la roue dentée. La roue dentée est alors montée à rotation sur le support tout en étant fixe longitudinalement par rapport audit support.

La roue dentée 120 est destinée à être entraînée en rotation par une vis sans fin 124 portée par l'extrémité inférieure d'un arbre vertical d'entraînement 126.

L'arbre d'entraînement 126 est monté à rotation autour de son axe vertical dans des paliers 128 portés par le boîtier 72. Le palier 128 inférieur de l'arbre d'entraînement 126 porte notamment le support 100 de l'articulation 98.

L'extrémité supérieure de l'arbre d'entraînement 126 est munie d'un pignon d'entraînement 130 permettant son entraînement en rotation d'un pas dans un sens ou dans l'autre.

Comme représenté à la figure 9, les moyens de transmission comportent aussi un dispositif à cliquet commandé par le chariot 80 qui permet l'entraînement en rotation pas à pas de l'arbre d'entraînement 126.

Le dispositif à cliquet comporte notamment un coulisseau 132 qui est monté en coulissement longitudinal dans un rail 134 agencé de manière tangentielle au pignon d'entraînement 130 supérieur de l'arbre d'entraînement 126.

Le rail 134 comporte au moins un jour (non représenté) qui débouche sur le pignon d'entraînement 130.

Le rail 134 est ici réalisé venu de matière avec le palier 128 supérieur de l'arbre d'entraînement 126 et il est fixé contre une face extérieure du couvercle 76 latéral du boîtier 72.

Le couvercle 76 latéral du boîtier 72 est ajouré trois fentes 136A, 136B, 136C longitudinales qui sont étagées verticalement et qui débouchent dans le rail 134. Chaque fente forme respectivement une piste inférieure 136A, intermédiaire 136B et supérieure 136C.

La piste supérieure 136C s'étend d'une extrémité avant 138 jusqu'à un épaulement d'extrémité arrière d'activation 140. La piste inférieure 136A s'étend depuis une extrémité arrière 142 jusqu'à un épaulement d'extrémité avant d'activation 144. La piste intermédiaire 136B s'étend depuis l'extrémité avant 138 de la piste supérieure 136C jusqu'à l'extrémité arrière 142 de la piste inférieure 136A.

En outre, les deux pistes inférieures 136A et supérieure 136C se chevauchent partiellement longitudinalement. Ainsi, l'épaulement arrière d'activation 140 est agencé longitudinalement en arrière de l'épaulement avant d'activation 144.

Dans le mode de réalisation représenté aux figures 9 et 10, les trois fentes 136A, 136B et 136C sont jointives verticalement de manière à former une ouverture unique.

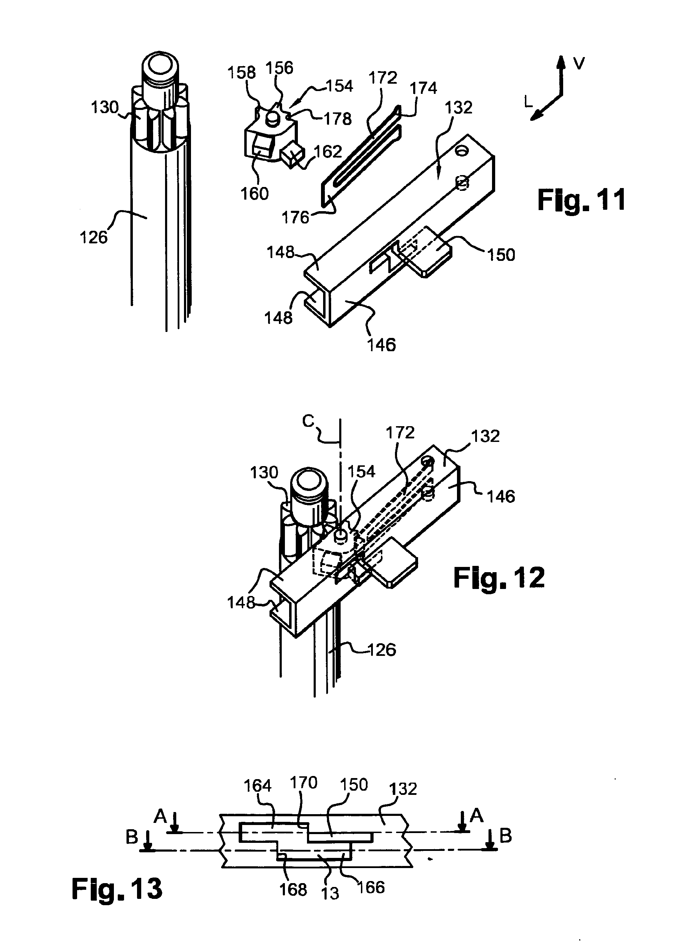

Comme représenté plus en détail aux figures 11 et 12, le coulisseau 132 est formé par une barre longitudinale profilé en forme de "U" ouvert latéralement en direction du pignon d'entraînement 130. Le coulisseau 132 comporte ainsi une âme 146 longitudinale verticale flanquée de deux ailes 148 qui s'étendent transversalement en direction de l'arbre d'entraînement 126 depuis les deux bords d'extrémité inférieure et supérieure de l'âme 146.

Le coulisseau 132 comporte aussi un ergot 150 qui s'étend transversalement depuis une face de l'âme 146 en saillie à l'intérieur du boîtier 72 en passant à travers la piste intermédiaire 136B du couvercle 76.

L'ergot 150 est reçu entre deux bras transversaux 152 de la tête 114 de chariot 80, qui sont représentés à la figure 4, sensiblement sans jeu longitudinal de manière à être attelé au chariot 80. Ainsi, le coulissement du chariot 80 dans les deux sens entraîne solidairement en coulissement longitudinal le coulisseau 132 dans son rail 134.

Le coulisseau 132 est ainsi susceptible de coulisser entre une position extrême avant dans laquelle l'ergot 150 est en butée contre le bord d'extrémité avant 138 de la piste intermédiaire 136B, et une position extrême arrière dans laquelle l'ergot 150 est en butée contre le bord d'extrémité arrière 142 de la piste intermédiaire 136B. La position d'extrémité avant correspond à la position d'extrémité avant de sollicitation de la course de commande "C1" de la tige de poussée 84, tandis que la position d'extrémité arrière correspond à la position extrême arrière de la course de réglage "C2" la tige de poussée 84.

Le coulisseau 132 porte un cliquet 154 qui est monté pivotant autour d'une axe vertical de basculement "C" entre les deux ailes 148 du coulisseau 132 par l'intermédiaire de tourillons verticaux. Le cliquet 154 comporte une dent de recul 156 et une dent d'avance 158 qui s'étendent radialement depuis l'axe de basculement "C" en formant un angle entre elles autour dudit axe de basculement "C".

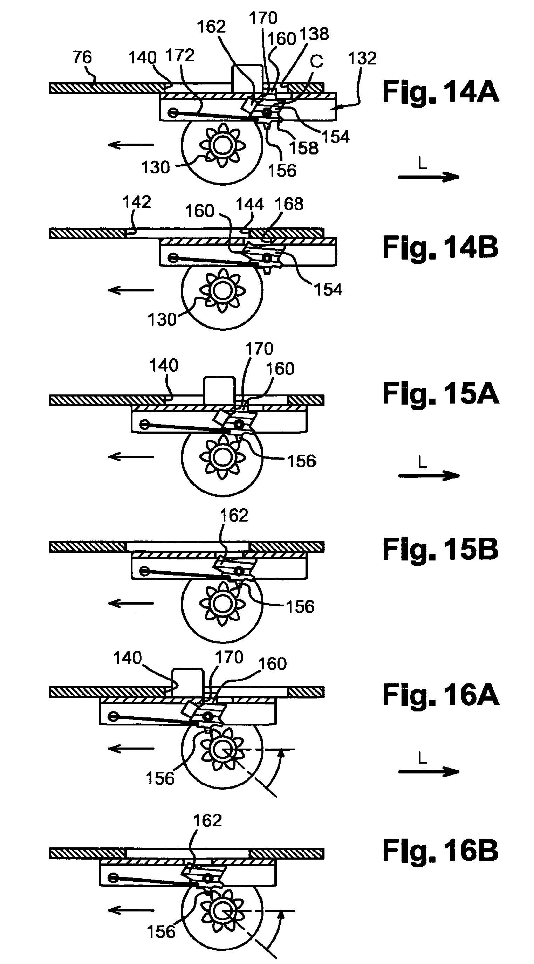

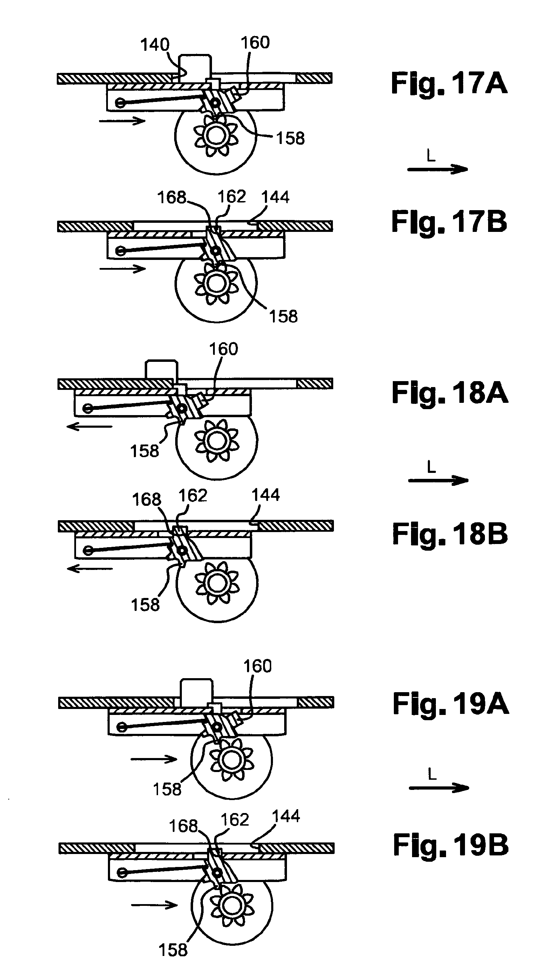

Le cliquet 154 est ainsi monté basculant entre :
- une position angulaire de recul, comme illustrée à la figure 14A, dans laquelle la dent de recul 156 est orientée transversalement de manière que, lors du passage au droit du pignon d'entraînement 130, la dent de recul 156 engrène le pignon d'entraînement 130 tandis que l'autre dent 158 est effacée de manière à ne pas engrener le pignon d'entraînement 130 ;
- et une position angulaire d'avance, comme illustrée à la figure 17A, dans laquelle la dent d'avance 158 est orientée transversalement de manière que, lors du passage au droit du pignon d'entraînement 130, la dent d'avance 158 engrène le pignon d'entraînement 130 tandis que l'autre dent 156 est effacée de manière à ne pas engrener le pignon d'entraînement 130.

En outre, le cliquet 154 comporte un doigt de butée angulaire de recul 160 et un doigt de butée angulaire d'avance 162 qui sont agencés respectivement en opposition avec la dent de recul 156 et la dent d'avance 158 par rapport à l'axe de basculement "C" afin de limiter respectivement le basculement du cliquet 154 dans sa position angulaire de recul et dans sa position angulaire d'avance.

Les doigts de butée 160, 162 sont décalés verticalement l'un par rapport à l'autre. Comme représenté à la figure 13, chacun des doigts de butée 160, 162 est reçu dans une fenêtre 164, 166 associée qui ajoure l'âme 146 du coulisseau 132. Chaque fenêtre 164, 166 comporte un bord vertical 168, 170 contre lequel le doigt de butée 160, 162 associé est destiné à venir en contact pour arrêter le basculement du cliquet 154 dans une de ses positions angulaires extrêmes associée, et chaque fenêtre 164, 166 est suffisamment longue pour permettre le passage du doigt de butée 160, 162 associé dans l'autre sens de rotation.

Ainsi, le doigt de butée de recul 160 est reçu dans une fenêtre supérieure 164 qui comporte un bord d'extrémité arrière 170. Le bord d'extrémité arrière 170 arrête le basculement dans un sens antihoraire, en se référant à la figure 10, du cliquet 154 dans sa position angulaire extrême de recul.

Le doigt de butée d'avance 162 est reçu dans une fenêtre inférieure 166 qui comporte un bord d'extrémité avant 168 qui arrête le basculement dans un sens horaire du cliquet 154 dans sa position angulaire extrême d'avance.

Dans les figures 14 à 20, la série de figures dont la numérotation fini par la lettre "A" montre la position du doigt de butée de recul 160 représenté avec des hachures, tandis que la série de figures dont la numérotation fini par la lettre "B" permet de voir la position du doigt de butée d'avance 162.

Comme représenté aux figures 11 et 12, le coulisseau 132 comporte aussi des moyens élastiques pour forcer le pivotement du cliquet 154 de manière stable dans ses deux positions angulaires extrêmes. Les moyens élastiques sont formés par une lame 172 verticale élastiquement flexible qui s'étend globalement longitudinalement entre les deux ailes 148 du coulisseau 132. Une extrémité distale 174 de la lame 172 est montée pivotante autour d'un axe vertical par l'intermédiaire de deux tourillons, tandis que l'autre extrémité proximale 176 est engagée dans une encoche 178 du cliquet 154. L'axe de pivotement de la lame de ressort 172 et l'axe de basculement "C" du cliquet 154 sont alignés longitudinalement.

Le cliquet 154 est ainsi basculant entre ses deux positions angulaires extrêmes stables à la manière d'un interrupteur électrique à bascule.

En outre, comme visible aux figures 14 à 20, la longueur de chaque doigt de butée angulaire 160, 162 du cliquet 154 est définie de manière que, lorsqu'un des doigts de butée 160, 162 est en butée contre le bord 168, 170 de la fenêtre 164, 166 associée, ledit doigt de butée 160, 162 fasse saillie transversalement à travers la fenêtre 164, 166 du coulisseau 132.

Ainsi, lorsque le cliquet 154 est dans sa position angulaire de recul, le doigt de butée angulaire de recul 160 est engagé dans la piste supérieure 136C associée du boîtier 72 alors que l'autre doigt de butée d'avance 162 est désengagé de la piste inférieure 136A.

Réciproquement, lorsque le cliquet 154 est dans sa position angulaire d'avance, le doigt de butée angulaire d'avance 162 est engagé dans la piste inférieure 136A associée du boîtier 72 alors que l'autre doigt de butée de recul 160 est désengagé de la piste supérieure 136C.

Lors du coulissement du coulisseau 132, chaque doigt de butée angulaire 160, 162 est ainsi susceptible de venir en contact avec l'épaulement d'activation 140, 144 de la piste 136A, 136C associée pour faire basculer le cliquet 154 dans une de ses positions angulaires extrêmes dite active.

Ainsi, lorsque le cliquet 154 est commandé par butée contre l'épaulement avant d'activation 144 vers sa position angulaire active de recul, le cliquet 154 est agencé longitudinalement en avant du pignon d'entraînement 130, comme illustré aux figures 14A et 14B. Lorsque le coulisseau 132 coulisse dans un premier sens actif orienté vers l'arrière le long d'un parcours de recul "R1" depuis cette position longitudinale, la dent de recul 156 est bloquée en rotation dans le sens antihoraire par le doigt de butée de recul 160. Elle entraîne donc l'arbre d'entraînement 126 en rotation de manière à faire reculer la position de l'articulation 98 d'un pas vers l'arrière.

Comme représenté à la figure 8, le parcours de recul "R1" comporte un point de départ "RD1" à partir duquel il est parcouru vers l'arrière jusqu'à un point d'arrivée agencé en arrière du pignon d'entraînement 130. Le point de départ "RD1" est ici agencé à l'extrémité avant de la course de réglage "C2".

Lorsque le cliquet 154 est commandé par butée contre l'épaulement arrière d'activation 140 vers sa position angulaire active d'avance, le cliquet 154 est agencé longitudinalement en arrière du pignon d'entraînement 130, comme illustré aux figures 17A et 17B. Lorsque le coulisseau 132 coulisse dans un deuxième sens actif orienté vers l'avant le long d'un parcours d'avance "R2" depuis cette position longitudinale, la dent d'avance 158 est bloquée en rotation dans le sens horaire par le doigt de butée d'avance 162. Elle entraîne donc l'arbre d'entraînement 126 en rotation de manière à faire avancer la position de l'articulation 98 d'un pas vers l'arrière.

Comme représenté à la figure 8, le parcours d'avance "R2" comporte un point de départ "RD2" à partir duquel il est parcouru vers l'avant jusqu'à un point d'arrivée agencé en avant du pignon d'entraînement 130. Le point de départ "RD2" est ici agencé à l'extrémité arrière de la course de réglage "C2".

Lorsque le cliquet 154 occupe sa position angulaire de recul en étant agencé en arrière du pignon d'entraînement 130 ou lorsqu'il occupe sa position angulaire d'avance en étant agencé en avant du pignon d'entraînement 130, il est dans une position dite "passive". En effet, le coulissement du coulisseau 132 à rebours du parcours de recul "R1" ou d'avance "R2", dans un sens dit "passif' opposé au sens actif, entraîne le basculement du cliquet 154 dans sa deuxième position angulaire sans rotation de l'arbre d'entraînement 126 par simple contact entre la dent active 156, 158 et le pignon d'entraînement 130 car dans ce sens, la rotation du cliquet 154 n'est pas bloquée par les doigts de butée 160, 162.

Lors d'une étape préalable "E0" de détection d'un décalage entre une position de référence de la course d'embrayage de la tige de poussée 84 et une position de référence du système d'embrayage 44 au cours de laquelle un premier signal représentatif de la position de la tige de poussée 84 et un deuxième signal représentatif de l'état du système d'embrayage 44 sont envoyé à une unité électronique de traitement pour comparaison.

Le dispositif de rattrapage de jeu 118 est plus particulièrement mis en oeuvre lorsque l'unité électronique de contrôle détecte un décalage entre :
- la position que devrait théoriquement occuper le plateau de pression 52 par rapport au disque de friction 54 en fonction de la position de la tige de poussée 84 ;
- et la position réelle du plateau de pression 52.

Par exemple, la détection est réalisée pour la position de léchage du système d'embrayage 44. Cette position de léchage est en effet décalée de la même distance d'usure "d1" que la position extrême d'embrayage du plateau de pression 52.

La position de léchage est facilement détectable par des capteurs agencés sur chacun des arbres moteur 46 et mené 48 permettant de détecter un couple transmis à l'arbre mené 48.

Ainsi, il est aisé de se rendre compte de l'existence d'un décalage "d1" entre la position extrême d'embrayage théorique et la position extrême d'embrayage réelle du plateau de pression 52 du système d'embrayage 44. Lorsque ce décalage dépasse une valeur de seuil prédéterminée, correspondant par exemple à un pas "P" du dispositif de rattrapage 118, le dispositif de rattrapage 118 est commandé par l'unité électronique de commande.

Puis une phase de commande de l'actionneur 70 est déclenchée lorsque le décalage "d1" détecté lors de l'étape préalable "E0" excède une valeur déterminée et lorsque la butée d'actionnement 68 est dans sa position extrême de repos, et au cours de laquelle l'actionneur 70 est commandé par l'unité électronique de commande de manière à déplacer l'articulation 98 afin de diminuer le décalage détecté "d1".

Selon une première phase de mise en oeuvre du dispositif de rattrapage 118, l'unité de contrôle commande le dispositif 118 pour reculer l'articulation 98 d'un nombre défini de pas "P".

Lors d'une première étape de recul "E11" qui est déclenchée lorsque le système d'embrayage 44 la butée d'actionnement 68 est dans sa position de repos, l'actionneur 70 est commandé de manière à faire reculer le chariot 80 et donc le coulisseau 132 sur sa course de réglage "C2".

Comme représenté aux figures 17A, 17B, le cliquet 154 occupe alors avantageusement sa position angulaire de recul car il est nécessaire de reculer l'articulation 98 pour compenser l'usure des garnitures. Or, la compensation de l'usure doit être rapide car elle est susceptible d'être utilisée lors de l'utilisation du véhicule, tandis que l'avance n'est susceptible d'être utilisée que lors du remplacement du disque de friction 54 par un disque de friction neuf, c'est-à-dire alors que le véhicule est en cours d'entretien. Il n'est donc pas nécessaire de réaliser le réglage en avance aussi rapidement que le réglage en recul.

Le cliquet 154 est ainsi dans sa position active de recul.

Comme représenté aux figures 15A, 15B et 16A, 16B, le coulisseau 132 parcourt alors le premier parcours de recul "R1" dans lequel la dent de recul 156 du cliquet 154 engrène le pignon d'entraînement 130 en entraînant en rotation l'arbre d'entraînement 126 d'un pas "P", ce qui provoque le recul de l'articulation 98 d'un pas "P".

Le cliquet 154 est alors dans sa position passive de recul.

Puis, lors d'une deuxième étape d'initialisation en recul "E12", le coulisseau 132 coulisse vers l'avant, la dent de recul 156 du cliquet 154 entre en contact avec les dents du pignon d'entraînement 130. Cependant, comme illustré aux figures 17A, 17B, le doigt de butée angulaire de recul 160 n'empêche pas le basculement du cliquet 154 vers sa deuxième position angulaire. La dent de recul 156 s'efface ainsi sans entraîner en rotation le pignon d'entraînement 130.

Le coulisseau 132 est alors sur son trajet neutre dans lequel aucune action n'est possible sur l'arbre d'entraînement 126, car le cliquet 154 occupe toujours une position angulaire passive dans laquelle il bascule au passage au droit du pignon d'entraînement 130.

Si l'unité électronique de contrôle estime qu'il est nécessaire de reculer encore d'un pas "P" l'articulation 98, le coulisseau 132 est déplacé vers l'avant jusqu'à ce que le doigt de butée d'avance 162 entre en contact avec l'épaulement avant d'activation 144. Le contact entre le doigt de butée d'avance 162 et l'épaulement avant d'activation 144 fait alors basculer le cliquet 154 dans sa position active de recul comme représenté aux figures 14A, 14B. Cette position longitudinale du coulisseau 132 correspond au point de départ "RD1" du parcours de recul "R1".

Puis, comme expliqué précédemment, la première étape de recul "E11" est réitérée. Le coulisseau 132 est commandé en coulissement vers l'arrière de manière à faire tourner l'arbre d'entraînement 126 et ainsi faire reculer d'un pas "P" supplémentaire l'articulation 98.

Ces deux étapes de recul "E11" et d'initialisation en recul "E12" sont répétées autant de fois que nécessaire pour faire correspondre la position extrême d'embrayage réelle du plateau de pression 52 avec sa position extrême d'embrayage théorique.

Lorsque le réglage est fini, une troisième étape de retour "E13" est enclenchée au cours de laquelle le chariot 80 est rappelé vers sa position de repos correspondant à l'extrémité arrière de la course de commande "C1 ". Lors de ce retour, le contact entre le doigt de butée d'avance 162 et l'épaulement avant d'activation 144 fait basculer le cliquet 154 dans sa position angulaire active de recul, comme représenté aux figures 14A, 14B, dans laquelle il restera pendant que le coulisseau 132 parcourra la course d'embrayage "C1".

Lorsque le coulisseau 132 parcourt la course d'embrayage, le doigt de butée de recul 160 est engagé dans la piste supérieure 136C du boîtier 72.

Il est aussi possible d'effectuer un réglage en avançant l'articulation 98 d'un nombre déterminé de pas "P", par exemple lorsque le disque de friction usagé est remplacé par un disque de friction neuf présentant ainsi une garniture de friction plus épaisse.

L'unité électronique de commande met alors en oeuvre une deuxième phase de réglage par avance.

Dans ce cas, une première étape du recul "E21" identique à l'étape "E11" déjà décrite dans le procédé de recul est enclenchée. L'articulation 98 se retrouve alors reculée d'un pas et le cliquet 154 est en position passive de recul sur son parcours neutre.

Pour faire avancer l'articulation 98 d'un pas et ainsi revenir à sa position initiale avant réglage, une deuxième étape d'initialisation en avance "E22" est alors enclenchée. Au cours de cette deuxième étape "E22", le coulisseau 132 est reculé jusqu'à ce que le doigt de butée de recul 160 soit en contact avec l'épaulement arrière d'activation 140. Ceci est illustré par l'enchaînement successif des figures 16A, 16B et 18A, 18B en omettant les figures 17A, 17B. Le cliquet 154 bascule alors dans sa position angulaire active d'avance. Cette position longitudinale du coulisseau 132 correspond au point de départ "RD2" du parcours d'avance "R2".

Puis, une troisième étape d'avance "E23" est enclenchée au cours de laquelle le coulisseau 132 est avancé jusqu'à ce que la dent d'avance 158 engrène le pignon d'entraînement 130 et fasse ainsi pivoter l'arbre d'entraînement 126 et avancer l'articulation 98 d'un pas "P" comme représenté aux figures 19A, 19B puis 20A, 20B.

Le cliquet 154 se retrouve alors sur son parcours neutre.

Les étapes d'initialisation en avance "E22" et d'avance "E23" sont ensuite répétées de manière que l'articulation 98 avance du nombre de pas "P" adapté pour que les positions théorique et réelle du plateau de pression 52 soient en coïncidence.

A l'issue du procédé de réglage en avance, le coulisseau 132 est commandé vers sa position de repos au cours d'une dernière étape de retour "E24" identique à la dernière étape "E13" du procédé de réglage en recul. Le cliquet 154 est alors en position angulaire active de recul comme représenté aux figures 14A, 14B.

Un tel dispositif 118 permet ainsi de rattraper non seulement l'usure des garnitures mais aussi les jeux de montage et de fabrication de l'embrayage. En effet, l'étalonnage du dispositif de rattrapage 118 se fait par rapport à la course de commande de la tige de poussée 84 telle que déterminée avant montage sur le véhicule automobile.

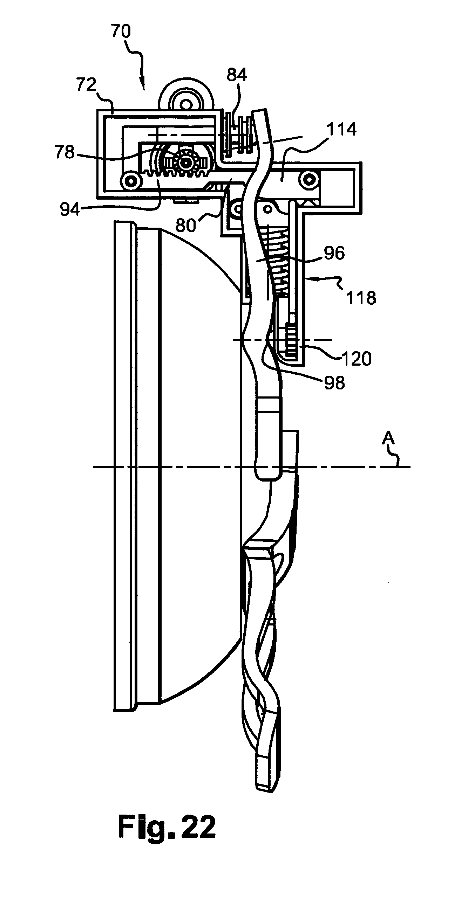

On a représenté aux figures 21 à 24, un deuxième mode de réalisation des moyens de transmission du mouvement de la tige de poussée 84 jusqu'à l'articulation 98.

Comme décrit dans le premier mode de réalisation, la tige de poussée 84 est susceptible de se déplacer le long d'une course de commande "C1" et d'une course de réglage "C2".

L'articulation 98 du levier 96 est montée de la même manière qu'expliquée dans le premier mode de réalisation. Ainsi, l'articulation 98 est entraînée en coulissement longitudinal dans un sens ou dans l'autre par rotation de la roue dentée 120.

Cependant, la roue dentée 120 n'est pas associée à une vis sans fin.

Le dispositif de rattrapage 118 comporte ici deux chemins longitudinaux parallèles de came 180, 182 portés par une face inférieure de la tête 114 du chariot 80 en avant de la pente de compensation 112.

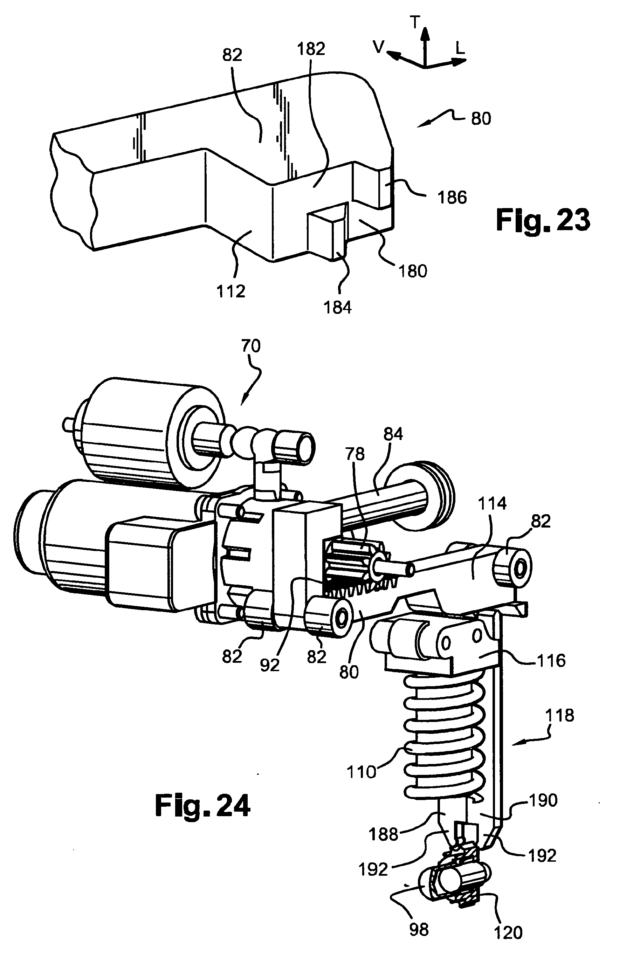

Comme représenté plus en détail à la figure 23, le premier chemin de came de recul 180 comporte un bossage 184 qui est décalé longitudinalement vers l'avant par rapport à l'extrémité arrière du chemin de came d'avance 182 et le deuxième chemin de came d'avance 182 comporte un bossage 186 qui est agencé à une extrémité arrière du chemin de came d'avance 182.

Comme représenté à la figure 24, le dispositif de rattrapage 118 comporte aussi deux suiveurs de came 188, 190 qui sont identiques par symétrie par rapport à un plan longitudinal vertical qui passe entre les deux chemins de came 180, 182. Un seul suiveur de came 180 sera donc décrit par la suite, la description étant applicable par analogie à l'autre suiveur de came 182.

Le suiveur de came 188 est formé d'une barre verticale qui porte à son extrémité inférieure un cliquet 192 et à son extrémité supérieure une tête 194 de suivi du chemin de came 180.

Le cliquet 192 est monté pivotant autour d'un axe longitudinal entre une position angulaire d'encliquètement dans laquelle le cliquet 192 est susceptible d'appuyer verticalement vers le bas et dans laquelle il est rappelé élastiquement et une position angulaire écartée dans laquelle le cliquet 192 est écarté transversalement de la roue dentée 120.

Le cliquet 192 est ici réalisé venu de matière avec le suiveur de came 188. Le cliquet 192 est plus particulièrement formé par un tronçon d'extrémité inférieure flexible élastiquement.

Le suiveur de came 188 est monté coulissant verticalement par rapport à l'actionneur 70 entre une position haute dans laquelle le cliquet 192 est agencé au-dessus et à distance de la roue dentée 120 vers laquelle il est rappelé élastiquement, et une position inférieure dans laquelle l'extrémité inférieure du cliquet 192 est encliquetée dans la roue dentée 120.

Le coulissement vertical du suiveur de came 188 est commandé par le passage du bossage 184 du chemin de came 180 associé lors du coulissement longitudinal du chariot 80. Les chemins de came 180, 182 et les bossages 184, 186 sont agencés de manière que les suiveurs de came 188, 190 suivent les chemin de came 180, 182 lorsque la tige de poussée 84 est commandée sur sa course de réglage "C2".

Ainsi, lors du coulissement vertical du suiveur de came 188, 190 vers sa position inférieure, le cliquet 192 dans sa position angulaire d'encliquètement engrène la roue dentée 120 d'un côté prédéterminé du sommet de la roue dentée 120. En poursuivant le coulissement vers le bas du suiveur de came 188, 190, le cliquet 192 entraîne ainsi la rotation dans un sens de la roue dentée 120 ce qui provoque le coulissement dans un sens associé de l'articulation 98.

Lorsque le suiveur de came 188, 190 atteint sa position basse, le cliquet 192 est alors écarté vers sa position angulaire écartée par les dents de la roue dentée 120. Ainsi, lors du rappel élastique du suiveur de came 188, 190 vers sa position haute, le cliquet 192 s'écarte pour ne pas entraîner la roue dentée 120 en rotation.

Les suiveurs de came 188, 190 sont agencés de part et d'autre du sommet supérieur de la roue dentée 120 de manière que chaque suiveur de came 188, 190 permette l'entraînement en rotation de la roue dentée 120 dans un seul sens associé.

Pour ce dispositif de rattrapage 118, comme illustré à la figure 21, les deux parcours de recul "R1" et d'avance "R2" de la tige de poussée 84 ne se chevauchent pas, du fait du décalage longitudinal des deux bossages 184, 186.

Avantageusement, le chemin de came 180 qui comporte le bossage 184 le plus proche du suiveur de came 188 associé lorsque la tige de poussée 84 est dans sa position de repos, est associé au suiveur de came de recul 188 pour permettre un recul rapide de l'articulation 98 pur les mêmes raisons qu'exposées dans le premier mode de réalisation. Ainsi, les chemins de came 180, 182 sont conformés de manière que le premier suiveur de came de recul 188 soit actionné avant le deuxième suiveur de came d'avance 190 lorsque la tige de poussée 84 se déplace le long de sa course de réglage C2 depuis sa position de repos.

Ce dispositif de rattrapage 118 est mis en oeuvre par un procédé d'avance ou de recul analogue à celui décrit dans le premier mode de réalisation.

Le dispositif de rattrapage 118 par coulissement de l'articulation 98 du levier 96 réalisé selon les enseignements de l'invention permet est ainsi avantageusement très compacte.

En outre, le fait que ce dispositif de rattrapage 118 soit commandé par l'actionneur 70 permet de diminuer encore l'encombrement et les coûts de réalisation.

De plus, un tel dispositif de rattrapage 118 ainsi piloté permet de rattraper non seulement les jeux dus à l'usure des garnitures mais aussi de rattraper les jeux de montage ou de fabrication.

## Revendications

1. Mécanisme de commande (66) pour un système d'embrayage à friction (44) de véhicule automobile qui comporte :
- un levier d'actionnement (96) qui est monté pivotant autour d'un axe transversal (B) par l'intermédiaire d'une articulation (98) et qui comporte deux bras de levier (106, 108) dont chacun présente une longueur fixe ;
- une butée d'actionnement (68) de l'embrayage (44) qui est montée coulissante longitudinalement sur une course d'embrayage (d0) délimitée par une position extrême de sollicitation de l'embrayage et une position extrême de repos ;
- un actionneur (70) comportant une tige longitudinale (84) coulissante qui est destinée à pousser longitudinalement le premier bras de levier (106) pour faire coulisser la butée d'actionnement (68) par l'intermédiaire du deuxième bras de levier (108) ;
- un dispositif de rattrapage (118) de jeu longitudinal de l'embrayage (44), notamment de l'usure de garnitures de friction, qui est commandé de manière à décaler longitudinalement la butée d'actionnement (68) pour que la distance (d0) de la course d'embrayage de la butée d'actionnement (68) demeure sensiblement constante ; dans lequel l'articulation (98) du levier (96) est montée mobile longitudinalement, et dans lequel le dispositif de rattrapage de jeu (118) agit sur la position longitudinale de l'articulation (98) du levier (96) pour rattraper le jeu longitudinal, le dispositif de rattrapage (118) étant commandé par l'actionneur (70), **caractérisé en ce que** le dispositif de rattrapage (118) comporte des moyens de transmission du mouvement de la tige de poussée (84) jusqu'à l'articulation (98).

2. Mécanisme (66) selon la revendication précédente, **caractérisé en ce que** la tige de poussée (84) est mobile sur un trajet qui est divisé en deux courses non chevauchantes :
- une première course de commande (C1) qui permet d'agir sur la butée d'actionnement (68) pour commandeur l'embrayage à friction (44), la butée d'actionnement (68) étant rappelée élastiquement vers sa position extrême de repos correspondant à une position de repos de la tige de poussée (84) ;
- et une deuxième course de réglage (C2) qui prolonge la première course (C1) au-delà de la position de repos de la tige de poussée (84) et le long de laquelle l'actionneur (70) commande le dispositif de rattrapage (118) par l'intermédiaire des moyens de transmission sans agir sur l'état de l'embrayage (44).

3. Mécanisme (66) selon la revendication précédente, **caractérisé en ce que** l'articulation (98) du levier (96) est portée par une roue dentée (120) transversale qui est vissée sur une vis longitudinale (122) montée fixe longitudinalement par rapport à l'actionneur (70), la rotation de la roue dentée (120) dans une première direction permettant de déplacer l'articulation (98) dans le sens d'avance et la rotation de la roue dentée (120) dans une deuxième direction opposée permettant de déplacer l'articulation (98) dans le sens de recul.

4. Mécanisme (66) selon la revendication précédente, **caractérisé en ce que** les moyens de transmission comportent :
- au moins un premier chemin longitudinal de came (180) qui est solidaire en coulissement longitudinal de la tige de poussée (84) et qui comporte un bossage (184) ;
- au moins un premier suiveur de came (188) qui est associé au premier chemin de came (180) et qui porte un cliquet (192) qui est apte à entraîner la roue dentée (120) en rotation uniquement dans une direction associée lors du passage du bossage (184) au droit du suiveur de came (180) associé de manière à commander le coulissement de l'articulation (98) pour diminuer le décalage (d1) créé par l'usure des garnitures de friction.

5. Mécanisme (66) selon la revendication précédente, **caractérisé en ce que** les moyens de transmission comportent :
- un deuxième chemin longitudinal de came (182) qui est parallèle au premier chemin de came (180), qui est solidaire en coulissement longitudinal de la tige de poussée (84) et qui comporte un bossage (186) ;
- un deuxième suiveur de came (190) qui est associé au deuxième chemin de came (182) et qui porte un cliquet (192) qui est apte à entraîner la roue dentée (120) en rotation uniquement dans une direction associée lors du passage du bossage (186) au droit du suiveur de came associé (190) de manière à commander le coulissement de l'articulation (98) dans un sens opposé à celui du premier suiveur de came (188).

6. Mécanisme (66) selon l'une quelconque des revendications 4 ou 5, **caractérisé en ce que** chaque suiveur de came (188, 190) est monté mobile entre :
- une position de repos dans laquelle le cliquet (192) n'interfère pas avec la rotation de la roue dentée (120) et vers laquelle il est rappelé élastiquement ; et
- une position active dans laquelle le cliquet (192) entraîne la rotation de la roue dentée (120) d'un pas dans la direction associée afin de déplacer l'articulation (98).

7. Mécanisme (66) selon l'une quelconque des revendications 5 ou 6, **caractérisé en ce que** les chemins de came (180, 182) sont conformés de manière que le premier suiveur de came (188) soit actionné avant le deuxième suiveur de came (190) lorsque la tige de poussée (84) se déplace le long de sa course de réglage (C2) depuis sa position de repos.

8. Mécanisme (66) selon la revendication précédente, **caractérisé en ce que** les moyens de transmission comportent :
- un arbre vertical d'entraînement (126) de la roue dentée (120) en rotation au moyen d'une vis sans fin (124), l'extrémité supérieure de l'arbre d'entraînement étant munie d'un pignon d'entraînement (130) ;
- un cliquet (154) comportant au moins une dent de réglage (156) qui est monté coulissant solidairement avec la tige de poussée (84), le cliquet (154) étant monté basculant par rapport à la tige de poussée (84) entre une première position angulaire stable dans laquelle la dent de recul est susceptible d'engrener le pignon (130) de l'arbre (126) pour le faire tourner lors du coulissement de la tige de poussée (84) dans un premier sens actif le long de la course de réglage (C2), et vers laquelle il est forcé élastiquement et une deuxième position angulaire dans laquelle la dent de recul (156) est escamotée par contact avec les dents du pignon (130) lors du coulissement du cliquet dans un premier sens passif.

9. Mécanisme (66) selon la revendication précédente, **caractérisé en ce que** le cliquet (154) comporte une deuxième dent d'avance (158) qui est escamotée dans la première position angulaire stable du cliquet (154) par contact avec les dents du pignon (130) lors du coulissement du cliquet (154) dans un deuxième sens passif, le deuxième dent d'avance (158) étant susceptible d'engrener le pignon (130) de l'arbre (126) pour le faire tourner lorsque le cliquet (154) est dans sa deuxième position angulaire et lorsque le cliquet (154) coulisse dans un deuxième sens actif, et le cliquet (154) étant forcé élastiquement dans sa deuxième position angulaire ;
et **en ce que** le cliquet (154) est commandé dans l'une ou l'autre de ses positions angulaires stable par butée à chaque extrémité de la course de réglage (C2) pour permettre de provoquer l'entraînement en rotation de l'arbre d'entraînement (126) par coulissement du cliquet (154) dans un sens actif en direction de l'autre extrémité de la course de réglage (C2).

10. Mécanisme (66) selon l'une quelconque des revendications 8 ou 9, **caractérisé en ce que** le sens actif de coulissement du cliquet (154) qui commande le coulissement de l'articulation (98) pour la diminution du décalage (d1) dû à l'usure des garnitures de friction correspond au sens de coulissement de la tige de poussée (84) sur sa course de commande (C1) en direction de sa position de repos.

11. Procédé de commande du mécanisme (66) selon l'une quelconque des revendications précédentes, **caractérisé en ce qu'**il comporte :
- une étape préalable (E0) de détection d'un décalage entre une position de référence de la tige de poussée (84) et une position de référence du système d'embrayage (44) au cours de laquelle un premier signal représentatif de la position de la tige de poussée (84) et un deuxième signal représentatif de l'état du système d'embrayage (44) sont envoyés à une unité électronique de traitement pour comparaison ;
- une phase de commande de l'actionneur (70) qui est déclenchée lorsque le décalage (d1) détecté lors de la première étape excède une valeur déterminée (P) et lorsque la butée d'actionnement (68) est dans sa position de repos, et au cours de laquelle l'actionneur (70) est commandé par l'unité électronique de commande de manière à déplacer l'articulation (98) afin de diminuer le décalage (d1) détecté.

## Patentansprüche

1. Steuermechanismus (66) für ein Reibungskupplungssystem (44) eines Kraftfahrzeugs, umfassend:
- einen Betätigungshebel (96), der durch ein zwischengeschaltetes Gelenk (98) schwenkbar um eine Querachse (B) montiert ist und der zwei Hebelarme (106, 108) umfasst, von denen jeder eine feste Länge aufweist;
- ein Betätigungslager (68) der Kupplung (44), das in Längsrichtung über einen Einkuppelweg (d0) verschiebbar montiert ist, welcher durch eine Endposition der Beaufschlagung der Kupplung und eine Ruhe-Endposition begrenzt ist,
- ein Stellorgan (70), das einen verschiebbaren Längsstößel (84) umfasst, welcher dazu bestimmt ist, in Längsrichtung den ersten Hebelarm (106) zu drücken, um das Betätigungslager (68) unter Zwischenschaltung des zweiten Hebelarms (108) zu verschieben;
- eine Vorrichtung (118) zum Ausgleich des Längsspiels der Kupplung (44), insbesondere des Verschleißes der Reibbeläge, die gesteuert wird, um das Betätigungslager (68) in Längsrichtung zu versetzen, damit die Entfernung (d0) des Einkuppelwegs des Betätigungslagers (68) in etwa konstant bleibt; wobei das Gelenk (98) des Hebels (96) in Längsrichtung beweglich montiert ist, und wobei die Vorrichtung zum Ausgleich des Spiels (118) auf die Längsposition des Gelenks (98) des Hebels (96) einwirkt, um das Längsspiel auszugleichen, wobei die Ausgleichsvorrichtung (118) von dem Stellorgan (70) gesteuert wird, **dadurch gekennzeichnet, dass** die Ausgleichsvorrichtung (118) Mittel zur Übertragung der Bewegung des Schubstößels (84) bis zu dem Gelenk (98) umfasst.

2. Mechanismus (66) nach dem vorherigen Anspruch, **dadurch gekennzeichnet, dass** der Schubstößel (84) über eine Strecke bewegbar ist, die in zwei sich nicht überlappende Wege unterteilt ist:
- ein erster Steuerungsweg (C1), der es erlaubt, auf das Betätigungslager (68) einzuwirken, um die Reibungskupplung (44) zu steuern, wobei das Betätigungslager (68) elastisch in seine Ruhe-Endposition zurückgestellt wird, die einer Ruheposition des Schubstößels (84) entspricht;
- und ein zweiter Regelungsweg (C2), der den ersten Weg (C1) jenseits der Ruheposition des Schubstößels (84) verlängert, und entlang dessen das Stellorgan (70) die Ausgleichsvorrichtung (118) unter Zwischenschaltung der Mittel zur Übertragung steuert, ohne auf den Zustand der Kupplung (44) einzuwirken.

3. Mechanismus (66) nach dem vorherigen Anspruch, **dadurch gekennzeichnet, dass** das Gelenk (98) des Hebels (96) von einem Quer-Zahnrad (120) getragen ist, das auf eine Längsschraube (122) geschraubt ist, welche im Verhältnis zum Stellorgan (70) in Längsrichtung fest montiert ist, wobei es die Drehung des Zahnrads (120) in einer ersten Richtung erlaubt, das Gelenk (98) in der Richtung des Vorschubs zu verlagern und wobei es die Drehung des Zahnrads (120) in einer entgegen gesetzten zweiten Richtung erlaubt, das Gelenk (98) in der Richtung des Zurücknehmens zu verlagern.

4. Mechanismus (66) nach dem vorherigen Anspruch, **dadurch gekennzeichnet, dass** die Mittel zur Übertragung umfassen:
- mindestens einen ersten Längs-Nockenläufer (180), der in Längsverschiebung mit dem Schubstößel (84) zusammenhaltend ist und der einen Höcker (184) umfasst;
- mindestens einen ersten Nockenfolger (188), der dem ersten Nockenläufer (180) zugeordnet ist und der eine Klinke (192) trägt, die geeignet ist, das Zahnrad (120) nur in einer zugeordneten Richtung drehend anzutreiben, wenn der Höcker (184) auf Höhe des zugeordneten Nockenfolgers (188) vorbeigeht, in der Art, dass die Verschiebung des Gelenks (98) gesteuert wird, um den vom Verschleiß der Reibbeläge hervorgerufenen Versatz (d1) zu verringern.

5. Mechanismus (66) nach dem vorherigen Anspruch, **dadurch gekennzeichnet, dass** die Mittel zur Übertragung umfassen:
- einen zweiten Längs-Nockenläufer (182), der parallel zum ersten Nockenläufer (180) ist und der in Längsverschiebung mit dem Schubstößel (84) zusammenhaltend ist und einen Höcker (186) umfasst;
- einen zweiten Nockenfolger (190), der dem zweiten Nockenläufer (182) zugeordnet ist und der eine Klinke (192) trägt, die geeignet ist, das Zahnrad (120) nur in einer zugeordneten Richtung drehend anzutreiben, wenn der Höcker (186) auf Höhe des zugeordneten Nockenfolgers (190) vorbeigeht, in der Art, dass die Verschiebung des Gelenks (98) in einer Richtung gesteuert wird, die derjenigen des ersten Nockenfolgers (188) entgegen gesetzt ist.

6. Mechanismus (66) nach einem der Ansprüche 4 oder 5, **dadurch gekennzeichnet, dass** jeder Nockenfolger (188, 190) beweglich montiert ist zwischen:
- einer Ruheposition, in welcher die Klinke (192) sich nicht mit der Drehung des Zahnrads (120) überlagert und zu welcher sie elastisch zurückgestellt wird; und
- einer aktiven Position, in welcher die Klinke (192) die Drehung des Zahnrads (120) um einen Schritt in der zugeordneten Richtung antreibt, um das Gelenk (98) zu verlagern.

7. Mechanismus (66) nach einem der Ansprüche 5 oder 6, **dadurch gekennzeichnet, dass** die Nockenläufer (180, 182) in der Art übereinstimmend ausgebildet sind, dass der erste Nockenfolger (188) vor dem zweiten Nockenfolger (190) aktiviert wird, wenn der Schubstößel (84) sich von der Ruheposition aus entlang seines Regelungswegs (C2) verlagert.

8. Mechanismus (66) nach dem vorherigen Anspruch, **dadurch gekennzeichnet, dass** die Mittel zur Übertragung umfassen:
- eine vertikale Welle (126) zum drehenden Antrieb des Zahlrads (120) mittels einer Schnecke (124), wobei das obere Ende der Antriebswelle mit einem Antriebsritzel (130) versehen ist;
- eine Klinke (154), die zumindest einen Regelungszahn (156) aufweist und mit dem Schubstößel (84) zusammenhaltend verschiebbar montiert ist, wobei die Klinke (154) relativ zum Schubstößel (84) schwenkend montiert ist zwischen einer ersten stabilen Winkelposition, in welcher der Rücknahmezahn geeignet ist, in das Ritzel (130) der Welle (126) einzugreifen, um es bei der Verschiebung des Schubstößels (84) in einer ersten aktiven Richtung entlang des Regelungswegs (C2) zum Drehen zu bringen und in welche sie elastisch beaufschlagt ist, und einer zweiten Winkelposition, in welcher der Rücknahmezahn (156) durch Kontakt mit den Zähnen des Ritzels (130) bei der Verschiebung der Klinke in einer ersten passiven Richtung eingefahren wird.

9. Mechanismus (66) nach dem vorherigen Anspruch, **dadurch gekennzeichnet, dass** die Klinke (154) einen zweiten Vorschubzahn (158) aufweist, der durch Kontakt mit den Zähnen des Ritzels (130) bei der Verschiebung der Klinke (154) in einer zweiten passiven Richtung in die erste stabile Winkelposition der Klinke (154) eingefahren wird, wobei der zweite Vorschubzahn (158) geeignet ist, in das Ritzel (130) der Welle (126) einzugreifen, um es zum Drehen zu bringen, wenn die Klinke (154) in ihrer zweiten Winkelposition ist und wenn die Klinke (154) in einer zweiten aktiven Richtung gleitet, und wobei die Klinke (154) elastisch in ihre zweite Winkelposition beaufschlagt ist;
und dadurch, dass die Klinke (154) in die eine oder die andere ihrer stabilen Winkelpositionen gesteuert wird durch Anschlag an jedem Ende des Regelungswegs (C2), um das Bewirken des drehenden Antriebs der Antriebswelle (126) durch Verschieben der Klinke (154) in einer aktiven Richtung hin zu dem anderen Ende des Regelungswegs (C2) zu erlauben.

10. Mechanismus (66) nach einem der Ansprüche 8 oder 9, **dadurch gekennzeichnet, dass** die aktive Richtung der Verschiebung der Klinke (154), welche die dem Verschleiß der Reibbeläge geschuldete Verschiebung des Gelenks (98) für die Verringerung der Verlagerung (d1) steuert, der Richtung der Verschiebung des Schubstößels (84) auf seinem Steuerungsweg (C1) in Richtung zu seiner Ruheposition entspricht.

11. Verfahren zur Steuerung des Mechanismus (66) nach einem der vorherigen Ansprüche, **dadurch gekennzeichnet, dass** es umfasst:
- einen vorherigen Schritt (E0) der Erfassung einer Verlagerung zwischen einer Referenzposition des Schubstößels (84) und einer Referenzposition des Kupplungssystems (44) im Laufe dessen ein der Position des Schubstößels (84) entsprechendes erstes Signal und ein dem Zustand des Kupplungssystems (44) entsprechendes zweites Signal zum Vergleich an eine elektronische Verarbeitungseinheit gesendet werden;
- eine Phase der Steuerung des Stellorgans (70), welche ausgelöst wird, wenn die im ersten Schritt erfasste Verlagerung (d1) einen vorbestimmten Wert (P) übersteigt und wenn das Betätigungslager (68) in seiner Ruheposition ist, und im Verlaufe derer das Stellorgan (70) von der elektronischen Steuerungseinheit gesteuert wird, um das Gelenk (98) zu verlagern, damit die erfasste Verlagerung (d1) verringert wird.

## Claims

1. Control mechanism (66) for a friction clutch system (44) for a motor vehicle which incorporates:
- an actuating lever (96) which is mounted pivoting about a transverse axis (B) by means of a joint (98) incorporating two lever arms (106, 108), each of which has a fixed length;
- an actuating stop (68) for the clutch (44) which is mounted sliding longitudinally over a clutch travel (d0) delineated by an extreme stress position of the clutch and an extreme rest position;
- an actuator (70) incorporating a sliding longitudinal rod (84) which is designed to push the first lever arm (106) longitudinally in order to make the actuation stop (68) slide via the second lever arm (108);
- a device (118) for taking up the longitudinal play of the clutch (44), mainly the wear of the friction linings, which is controlled so as to offset the actuation stop (68) longitudinally, so that the distance (d0) through which the clutch travel of the actuation stop (68) moves remains appreciably constant; in which the joint (98) of the lever (96) is mounted moving longitudinally and in which the device (118) to take up the play acts on the longitudinal position of the joint (98) of the lever (96) to take up the longitudinal play, the take-up device (118) being controlled by the actuator (70), **characterised in that** the take-up device (118) incorporates means for transmitting the movement of the push rod (84) as far as the joint (98).

2. Mechanism (66) according to the preceding claim, **characterised in that** the push rod (84) is mobile over a path which is divided into two unsuperimposed travels:
- a first control travel (C1) which acts on the actuation stop (68) to control the friction clutch (44), the actuation stop (68) being recalled elastically towards its extreme rest position, corresponding to a rest position of the push rod (84);
- and a second adjustment travel (C2) which extends the first travel (C1) beyond the rest position of the push rod (84) and along which the actuator (70) controls the take-up device (118) via the means of transmission without acting on the state of the clutch (44).

3. Mechanism (66) according to the preceding claim, **characterised in that** the joint (98) of the lever (96) is carried by a transverse toothed wheel (120) which is screwed on to a mounted longitudinal screw (122) fixed longitudinally relative to the actuator (70), the rotation of the toothed wheel (120) in a first direction moving the joint (98) in the forward direction and the rotation of the toothed wheel (120) in an opposite second direction moving the joint (98) in the reverse direction.

4. Mechanism (66) according to the preceding claim, **characterised in that** the means of transmission incorporate:
- at least one longitudinal cam path (180) which is integral with the longitudinal sliding of the push rod (84) and which incorporates a boss (184);
- at least one first cam follower (188) which is associated with the first cam path (180) and bearing a ratchet (192) which is capable of driving the toothed wheel (120) in rotation only in an associated direction during the passage of the boss (184) in line with the associated cam follower (180) so as to control the sliding of the joint (98) in order to reduce the offset (d1) created by the wear of the friction linings.

5. Mechanism (66) according to the preceding claim, **characterised in that** the means of transmission incorporate:
- a second longitudinal cam path (182) which is parallel to the first cam path (180), which is integral with the longitudinal sliding of the push rod (84) and which incorporates a boss (186);
- a second cam follower (190) which is associated with the second cam path (182) and which bears a ratchet (192) which is capable of driving the toothed wheel (120) in rotation only in one associated direction during the passage of the boss (186) in line with the associated cam follower (190) so as to control the sliding of the joint (98) in a direction opposite to that of the first cam follower (188).

6. Mechanism (66) according to either one of claims 4 or 5, **characterised in that** each cam follower (188, 190) is mounted moving between:
- a rest position in which the ratchet (192) does not interfere with the rotation of the toothed wheel (120) and towards which it is recalled elastically; and
- an active position in which the ratchet (192) drives the rotation of the toothed wheel (120) in the associated direction so as to move the joint (98).

7. Mechanism (66) according to either one of claims 5 or 6, **characterised in that** the cam paths (180, 182) are configured so that the first cam follower (188) is actuated before the second cam follower (190) when the push rod (84) is moved along its adjustment travel (C2) from its rest position.

8. Mechanism (66) according to the preceding claim, **characterised in that** the means of transmission incorporate:
- a vertical drive shaft (126) for the toothed wheel (120) in rotation by means of an endless screw (124), the top end of the drive shaft having a drive pinion (130);
- a ratchet (154) incorporating at least one adjustment tooth (156) which is mounted sliding integrally with the push rod (84), the ratchet (154) being mounted at an angle relative to the push rod (84) between a first stable angular position in which the reversing tooth can engage the pinion (130) of the shaft (126) so as to make it turn during the sliding of the push rod (84) in a first active direction along the adjustment travel (C2) and towards which it is forced elastically and a second angular position in which the reversing tooth (156) is retracted by contact with the teeth of the pinion (130) during the sliding of the ratchet in a first passive direction.

9. Mechanism (66) according to the preceding claim, **characterised in that** the ratchet (154) incorporates a second forward tooth (158) which is retracted into the first stable angular position of the ratchet (154) by contact with the teeth of the pinion (130) during the sliding of the ratchet (154) in a second passive direction, the second forward tooth (158) being capable of engaging the pinion (130) of the shaft (126) so as to make it turn when the ratchet (154) is in its second angular position and when the ratchet (154) slides in a second active direction and the ratchet (154) being forced elastically into its second angular position; and in which the ratchet (154) is held in one or the other of its stable angular positions by stop at each end of the adjustment travel (C2) in order to trigger the driving in rotation of the drive shaft (126) by sliding of the ratchet (154) in an active direction towards the other end of the adjustment travel (C2).

10. Mechanism (66) according to either one of claims 8 or 9, **characterised in that** the active direction of sliding of the ratchet (154) which controls the sliding of the joint (98) in order to reduce the offset (d1) due to wear of the friction linings is the same as the direction of sliding of the push rod (84) over its control travel (C1) towards its rest position.

11. Method for controlling the mechanism (66) according to any one of the preceding claims, **characterised in that** it incorporates:
- a first stage (E0) for detection of an offset between a reference position of the push rod (84) and a reference position of the clutch system (44) during which a first signal representative of the position of the push rod (84) and a second signal representative of the state of the clutch system (44) are sent to an electronic processing unit for comparison;
- a control phase of the actuator (70) which is triggered if the offset (d1) detected during the first stage exceeds a given value (P) and if the actuation stop (68) is in its rest position, and during which the actuator (70) is controlled by the electronic control unit so as to move the joint (98) in order to reduce the detected offset (d1).
